# EUROPEAN PATENT APPLICATION

(11) **EP 4 834 612 A1**
(43) Date of publication of application: **04.11.2026**
(21) Application number: 24911896.9
(22) Date of filing: 30.09.2024
(51) Int. Cl.: B60K 1/04, B60K 5/00, B60K 8/00, B60K 11/04, B62D 49/00, H01M 8/00, H01M 8/04, H01M 8/2475, H01M 8/04007

(54) **WORK MACHINE AND WORK VEHICLE**

(30) Priority: 26.12.2023 JP 2023219142; 26.12.2023 JP 2023219206; 26.12.2023 JP 2023219315
(71) Applicant: KUBOTA CORPORATION, Osaka-shi, Osaka 530-0011 (JP)
(72) Inventor: YASUDA, Soshi, Sakai-shi, Osaka 590-0908 (JP); KOSUGI, Shota, Sakai-shi, Osaka 590-0908 (JP); MATSUI, Kenshiro, Sakai-shi, Osaka 590-0908 (JP)
(74) Representative: Cabinet Beau de Loménie
(86) International application number: PCT/JP2024/034889
(87) International publication number: WO 2025/142002

(57) **Abstract**

A work machine includes a vehicle main body 11, a fuel cell 24, a battery 30, a motor 31, a first power converter (converter 26), and a second power converter (inverter 27). The vehicle main body 11 includes a vehicle body frame 41 and a support structure 50 with which the first power converter and the second power converter are mounted to the vehicle body frame 41. The support structure 50 includes a base portion 53 mounted to the vehicle body frame 41, a first support portion 51 having a first upright portion extending upright from the base portion 53, and supporting the first power converter with the first power converter mounted to the first upright portion, and a second support portion 52 having a second upright portion extending upright from the base portion 53, and supporting the second power converter with the second power converter mounted to the second upright portion.

## Description

### TECHNICAL FIELD

The present invention relates to a work machine and a work vehicle.

The present application claims priority to Japanese Patent Application No. 2023-219142 filed on December 26, 2023, the entire disclosure of which is hereby incorporated by reference.

The present application claims priority to Japanese Patent Application No. 2023-219206 filed on December 26, 2023, the entire disclosure of which is hereby incorporated by reference.

The present application claims priority to Japanese Patent Application No. 2023-219315 filed on December 26, 2023, the entire disclosure of which is hereby incorporated by reference.

### BACKGROUND ART

From the viewpoint of environmental protection, a work machine including a fuel cell has been proposed (see, for example, Patent Literature 1). This work machine is driven by a motor that rotates using electric power generated by the fuel cell. Patent Literature 1 discloses a tractor as an example of a work machine. Hydrogen is used as fuel for the fuel cell.

The tractor includes an electrical component such as a battery configured to store electric power generated by the fuel cell.

Patent Literature 2 discloses a work vehicle including: a motor; and a battery and a fuel cell each disposed in a hood. The fuel cell generates electric power to be stored in the battery, using hydrogen gas. The motor rotates using the electric power stored in the battery. The work vehicle travels using the torque from the motor as a driving force.

### CITATION LIST

### [PATENT LITERATURE]

PATENT LITERATURE 1: Japanese Laid-Open Patent Publication No. 2023-13186
PATENT LITERATURE 2: Japanese Laid-Open Patent Publication No. 2023-013188

### SUMMARY OF THE INVENTION

A work machine according to an embodiment of the present invention includes: a vehicle main body; a fuel cell installed on the vehicle main body; a battery configured to store electric power generated by the fuel cell; a motor configured to operate using electric power as energy; a first power converter; and a second power converter, the vehicle main body includes: a vehicle body frame; and a support structure with which the first power converter and the second power converter are mounted to the vehicle body frame, and the support structure includes: a base portion mounted to the vehicle body frame; a first support portion having a first upright portion extending upright from the base portion, and supporting the first power converter with the first power converter mounted to the first upright portion; and a second support portion having a second upright portion extending upright from the base portion, and supporting the second power converter with the second power converter mounted to the second upright portion.

A work vehicle according to an embodiment of the present invention includes: a motor; a working device configured to operate using motive power from the motor; a vehicle body including a support body supporting a transmission shaft configured to transmit motive power from the motor to the working device, and a pair of longitudinal frames coupled to a front side of the support body and spaced apart from each other in a vehicle-width direction; an electrical device including a battery unit configured to store electric power to be supplied to the motor; a fuel cell disposed above the pair of longitudinal frames and configured to generate electric power to be stored in the battery unit; an auxiliary device associated with the fuel cell; and a hood covering the fuel cell, and at least one of the electrical device and the auxiliary device is disposed between the pair of longitudinal frames.

A work machine according to an embodiment of the present invention includes: a machine frame; a fuel cell installed on the machine frame; an electrical component installed on the machine frame; and an auxiliary heat exchanger configured to perform heat exchange between a first heat transfer medium for adjusting a temperature of the fuel cell and a second heat transfer medium for adjusting a temperature of the electrical component.

### BRIEF DESCRIPTION OF DRAWINGS

[FIG. 1] FIG. 1 is a perspective view illustrating an example of an overall structure of a work machine in Chapter 1.
[FIG. 2] FIG. 2 is a left side view of the work machine in Chapter 1.
[FIG. 3] FIG. 3 is a bottom view of the work machine in Chapter 1.
[FIG. 4] FIG. 4 is a right side view of the work machine from which some exterior components are removed in Chapter 1.
[FIG. 5] FIG. 5 is a perspective view illustrating an example of an internal structure of a work vehicle in Chapter 1.
[FIG. 6] FIG. 6 is a block diagram illustrating an example of a functional configuration of the work vehicle in Chapter 1.
[FIG. 7] FIG. 7 is a perspective view of a support structure seen from the outside in a vehicle-width direction in Chapter 1.
[FIG. 8] FIG. 8 is an exploded view of the support structure in Chapter 1.
[FIG. 9] FIG. 9 is a perspective view of the support structure seen from the inside in the vehicle-width direction in Chapter 1.
[FIG. 10] FIG. 10 is a perspective view of the support structure from which a cover is removed in Chapter 1.
[FIG. 11] FIG. 11 is a perspective view of the support structure from which a second support portion and an inverter are removed in Chapter 1.
[FIG. 12] FIG. 12 is a perspective view illustrating a first modification of the support structure in Chapter 1.
[FIG. 13] FIG. 13 is a perspective view illustrating an exploded state of the support structure of FIG. 12.
[FIG. 14] FIG. 14 is a perspective view illustrating a second modification of the support structure in Chapter 1.
[FIG. 15] FIG. 15 is a perspective view of the support structure of FIG. 14 seen from another angle.
[FIG. 16] FIG. 16 is a perspective view illustrating an embodiment of a work vehicle disclosed in Chapter 2.
[FIG. 17] FIG. 17 is a front view of the work vehicle illustrated in FIG. 16.
[FIG. 18] FIG. 18 is a rear view of the work vehicle illustrated in FIG. 16.
[FIG. 19] FIG. 19 is a side view (right side view) of the work vehicle illustrated in FIG. 16.
[FIG. 20] FIG. 20 is a side view (left side view) of the work vehicle illustrated in FIG. 16.
[FIG. 21] FIG. 21 is a plan view of the work vehicle illustrated in FIG. 16.
[FIG. 22] FIG. 22 is a perspective view illustrating a part of the work vehicle illustrated in FIG. 16 in an exploded manner.
[FIG. 23] FIG. 23 is a right side view of the work vehicle illustrated in FIG. 16, from which a hood, a cover, and a part of a tank case are removed.
[FIG. 24] FIG. 24 is a schematic bottom view of a front portion of the work vehicle illustrated in FIG. 16 as seen from below.
[FIG. 25] FIG. 25 is a perspective view illustrating an example of an overall structure of a work machine in Chapter 3.
[FIG. 26] FIG. 26 is a right side view of a work vehicle from which some exterior components are removed in Chapter 3.
[FIG. 27] FIG. 27 is a perspective view illustrating an example of an internal structure of the work vehicle in Chapter 3.
[FIG. 28] FIG. 28 is a block diagram illustrating an example of a functional configuration of the work vehicle in Chapter 3.
[FIG. 29] FIG. 29 is an explanatory diagram illustrating an example of a temperature control system in Chapter 3.
[FIG. 30] FIG. 30 is an explanatory diagram illustrating a modification of the temperature control system in Chapter 3.
[FIG. 31] FIG. 31 is an explanatory diagram of a temperature control system of a work vehicle different in form from the temperature control system illustrated in FIG. 29 and the temperature control system illustrated in FIG. 30.

### DETAILED DESCRIPTION

### <Chapter 1>

### <Problems to be solved by the present disclosure>

It is necessary for the work machines described above to transform a voltage of electric power obtained by a fuel cell or to convert direct-current (DC) electric power into alternating-current (AC) electric power. For this purpose, the work machines include a power converter.

Hence, an object of the present disclosure is to provide a work machine including novel technical means for installing a power converter.

### <Advantageous effect of the present disclosure>

According to a work machine of the present disclosure, a first upright portion supporting a first power converter and a second upright portion supporting a second power converter extend upright from a base portion mounted to a vehicle body frame. The size of a support structure is reduced in a horizontal direction.

### <Outline of embodiments of the present disclosure>

An outline of below-listed embodiments of the present disclosure is described.
(1) A work machine according to an embodiment of the present disclosure includes: a vehicle main body; a fuel cell installed on the vehicle main body; a battery configured to store electric power generated by the fuel cell; a motor configured to operate using electric power as energy; a first power converter; and a second power converter.

The vehicle main body includes: a vehicle body frame; and a support structure with which the first power converter and the second power converter are mounted to the vehicle body frame.

The support structure includes: a base portion mounted to the vehicle body frame; a first support portion having a first upright portion extending upright from the base portion, and supporting the first power converter with the first power converter mounted to the first upright portion; and a second support portion having a second upright portion extending upright from the base portion, and supporting the second power converter with the second power converter mounted to the second upright portion.

According to the work machine having this configuration, the first upright portion supporting the first power converter and the second upright portion supporting the second power converter extend upright from the base portion mounted to the vehicle body frame. The size of the support structure is reduced in the horizontal direction (vehicle-width direction).

(2) In the work machine described in (1), preferably, the first power converter has a box shape, and the first upright portion has a first mounting surface facing one surface of the first power converter having the box shape such that the one surface is mounted to the first mounting surface.

According to this configuration, the first power converter and the first upright portion supporting the first power converter are placed so as to extend upright from the base portion.

(3) In the work machine described in (2), preferably, the second power converter has a box shape, and the second upright portion has a second mounting surface facing one surface of the second power converter having the box shape such that the one surface is mounted to the second mounting surface.

According to this configuration, the second power converter and the second upright portion supporting the second power converter are placed so as to extend upright from the base portion.

(4) In the work machine described in (3), preferably, the first mounting surface and the second mounting surface are spaced apart from each other in a width direction of the vehicle main body.

(5) In the work machine described in (4), preferably, the first power converter is disposed between the first mounting surface and the second mounting surface.

(6) In the work machine described in any one of (1) to (5), preferably, the first support portion and the second support portion are separate members and are individually mountable to the base portion.

According to this configuration, the first power converter and the second power converter are attachable and detachable individually. This configuration further improves assembly workability and maintainability.

(7) In the work machine described in any one of (1) to (5), preferably, the first support portion, the second support portion, and a part of the base portion are integrated as a single member.

According to this configuration, the first support portion, the second support portion, and a part of the base portion are integrated, which are integrally attachable to and detachable from the vehicle main body.

(8) In the work machine described in any one of (1) to (7), preferably, the support structure includes a cover covering, from a vehicle lateral side, a support unit including the first support portion and the second support portion.

According to this configuration, even if foreign matter is scattered to the support unit from outside the vehicle main body, the cover protects the support unit, which supports the first power converter and the second power converter, from the foreign matter.

(9) In the work machine described in (8), preferably, the first support portion and the second support portion are arranged side-by-side in a vehicle-width direction, and the cover covers the support unit from an outside in the vehicle-width direction.

According to this configuration, removing the cover enables maintenance of one or both of the first power converter and the second power converter.

(10) In the work machine described in (8) or (9), preferably, the first power converter and the second power converter are respectively connected to harnesses, and the cover covers a connection portion between the first power converter and the harness and a connection portion between the second power converter and the harness.

According to this configuration, the connection portion between the first power converter and the harness and the connection portion between the second power converter and the harness are covered by the cover and protected from foreign matter.

(11) In the work machine described in any one of (1) to (10), preferably, the vehicle main body includes a cabin, and the first support portion and the second support portion are located below the cabin.

This configuration reduces a wiring length between the first power converter and/or the second power converter and electrical components disposed around the cabin.

(12) In the work machine described in (11), preferably, the vehicle main body includes rear wheels on both sides of the vehicle body frame in a vehicle-width direction, and the first support portion and the second support portion are located between one of the rear wheels disposed in a pair and the vehicle body frame.

According to this configuration, the first power converter and the second power converter are covered from both sides in the vehicle-width direction and protected from damage to be caused externally.

(13) In the work machine described in (6), in which the first support portion and the second support portion are separate members, preferably, the support structure includes a first bolt with which the first support portion is fixed to the base portion, a second bolt with which the second support portion is fixed to the base portion, and a third bolt with which the first support portion and the second support portion are coupled together.

According to this configuration, the first support portion and the second support portion are coupled together with the third bolt, and the first support portion and the second support portion are stably mounted to the base portion.

(14) In the work machine described in any one of (1) to (13), preferably, the first power converter is located inward of the second power converter in a vehicle-width direction, the second support portion includes, as the second upright portion, a second inner frame located inward of the second power converter in the vehicle-width direction, an outside of the second support portion in the vehicle-width direction is open, and the support structure includes a cover covering, from the outside of the second support portion in the vehicle-width direction, the second power converter supported by the second support portion.

According to this configuration, when the cover is removed, the second power converter can be visually recognized with the second power converter mounted to the base portion with the second support portion. This configuration facilitates maintenance of the second power converter.

(15) In the work machine described in (14), preferably, the first support portion includes, as the first upright portion, a first inner frame located inward of the first power converter in the vehicle-width direction, and an outside in the vehicle-width direction is open.

According to this configuration, when the cover and the second support portion supporting the second power converter are removed, the first power converter can be visually recognized with the first power converter mounted to the base portion with the first support portion. This configuration facilitates maintenance of the first power converter.

### <Details of embodiments of the present disclosure>

Details of embodiments of the present disclosure are described below with reference to the drawings. It should be noted that at least some of the embodiments described below may be arbitrarily combined with each other.

### [Overall structure of work machine]

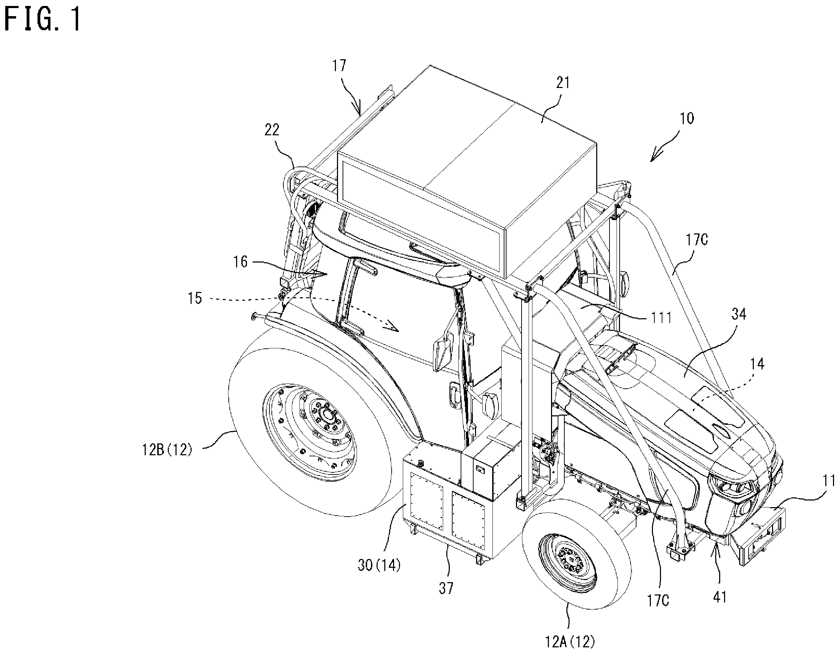

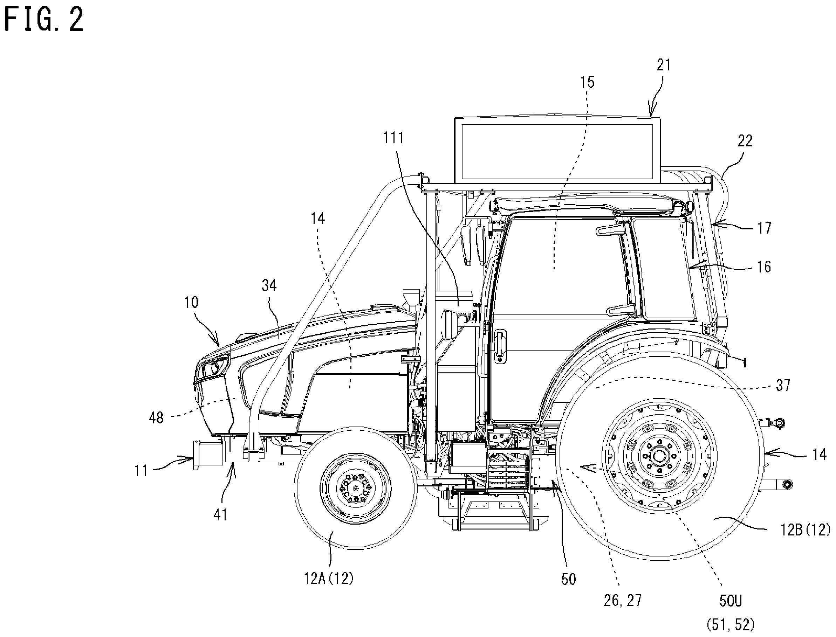

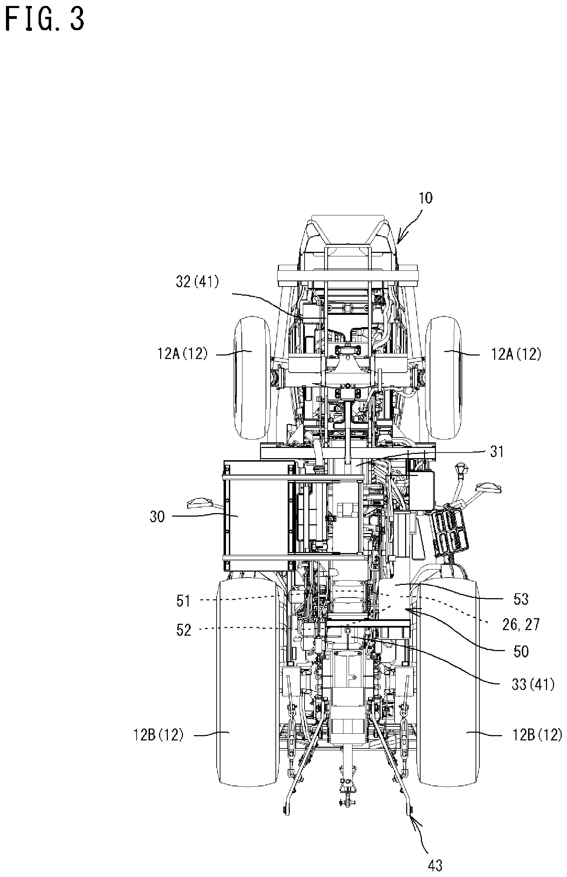

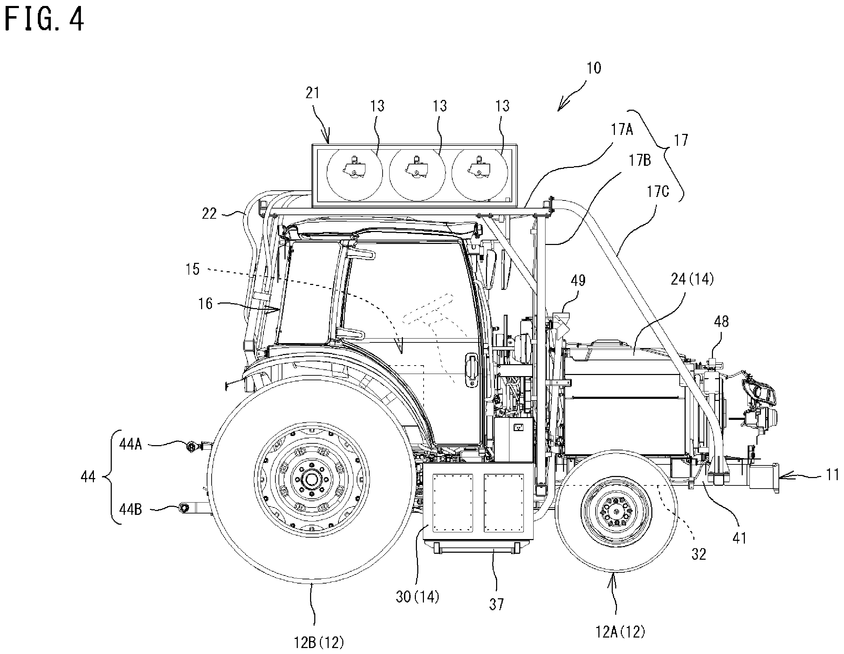

FIG. 1 is a perspective view illustrating an example of an overall structure of a work machine. FIG. 2 is a left side view of the work machine illustrated in FIG. 1. FIG. 3 is a bottom view of the work machine illustrated in FIG. 1. FIG. 4 is a right side view of the work machine from which some exterior components (such as a hood 34 and a cover 111) are removed.

The work machine of the present embodiment is a work vehicle for use in farmwork, and is specifically a tractor. The work machine is not limited to a tractor, and may be a movable body such as a construction machine or a utility vehicle. In the following, a description is given of a case where the work machine is a work vehicle (tractor) 10.

Directions of the work vehicle 10 are defined. The work vehicle 10 includes a driver's seat 15. The front, rear, left, right, upper, and lower sides of the work vehicle 10 are defined with respect to a driver sitting in the driver's seat 15. That is, the "front" side is directed forward of the driver, and the "rear" side is directed rearward of the driver. In addition, the "right" side is directed rightward of the driver, and the "left" side is directed leftward of the driver. A front-rear direction and a left-right direction are parallel to the ground, and are perpendicular to each other. An up-down direction is perpendicular to both the front-rear direction and the left-right direction.

In the following description, the left-right direction may also be referred to as a "vehicle-width direction". The front direction corresponds to a "traveling direction" of the work vehicle 10.

If the work vehicle 10 does not include the driver's seat 15, the "front" side is directed forward with the work vehicle 10 traveling in a work progression direction, and the "rear" side is directed rearward with the work vehicle 10 traveling in the opposite direction to the work progression direction. The "right" side is directed rightward with the work vehicle 10 traveling in the work progression direction, and the "left" side is directed leftward with the work vehicle 10 traveling in the work progression direction.

The work vehicle 10 includes a vehicle main body 11 including a chassis 41, a drive device 14, the driver's seat 15, a cabin 16, the hood 34, the cover 111, a tank unit 21, a first radiator 48, and a second radiator 49.

The hood 34 and the cover 111 are installed on the chassis 41, and the cabin 16 is disposed rearward of the cover 111. The hood 34, the cover 111, and the cabin 16 are arranged in this order from the front side to the rear side of the vehicle main body 11.

The cabin 16 is a driver's cab partitioned by front pillars, rear pillars, and a roof. The work vehicle 10 may include, in place of the cabin 16, a canopy or a rollover protective structure (ROPS). If the work vehicle 10 does not include the cabin 16, the tank unit 21 is disposed above the driver's seat 15 by an installation frame 17.

As illustrated in FIG. 4, the first radiator 48, a fuel cell 24, and the second radiator 49 are installed on a front portion of the chassis 41 with the first radiator 48, the fuel cell 24, and the second radiator 49 arranged in this order from the front side to the rear side. The first radiator 48 and the fuel cell 24 are covered with the hood 34, and the second radiator 49 is covered with the cover 111.

The tank unit 21 includes a tank 13 (see FIG. 4) configured to store fuel. The fuel is in a liquid or gaseous state, and examples of the fuel include hydrogen, methane, carbon monoxide (CO), and the like. In this embodiment, the tank 13 stores hydrogen gas. The drive device 14 is driven using the stored fuel. The work vehicle 10 is a fuel cell vehicle (FCV), and travels using, as an energy source, electric power generated by the fuel cell 24 through a chemical reaction between hydrogen and oxygen. The fuel cell 24 may generate electric power using methane or carbon monoxide (CO).

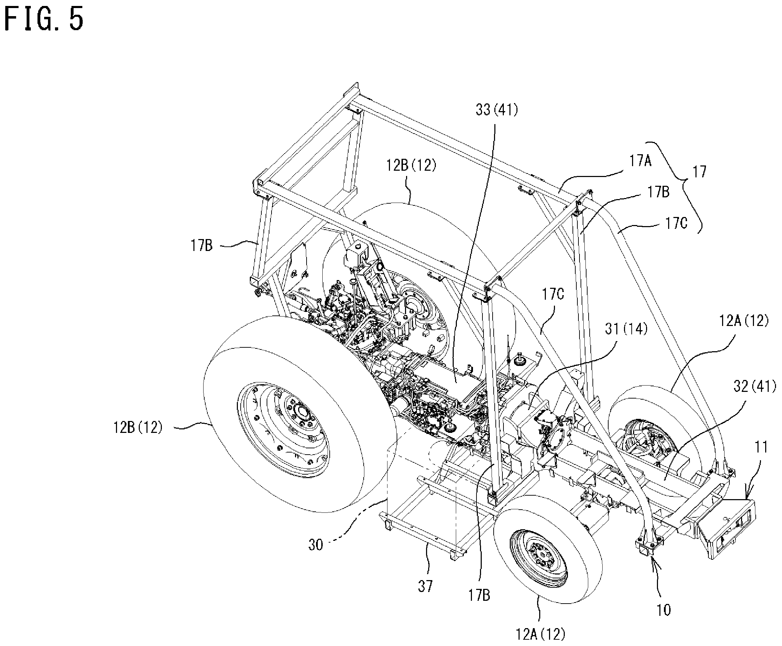

The drive device 14 (see FIG. 5) includes the fuel cell 24, a battery unit 30, and a motor 31. The battery unit 30 includes a battery pack (battery) configured to store electric power generated by the fuel cell 24.

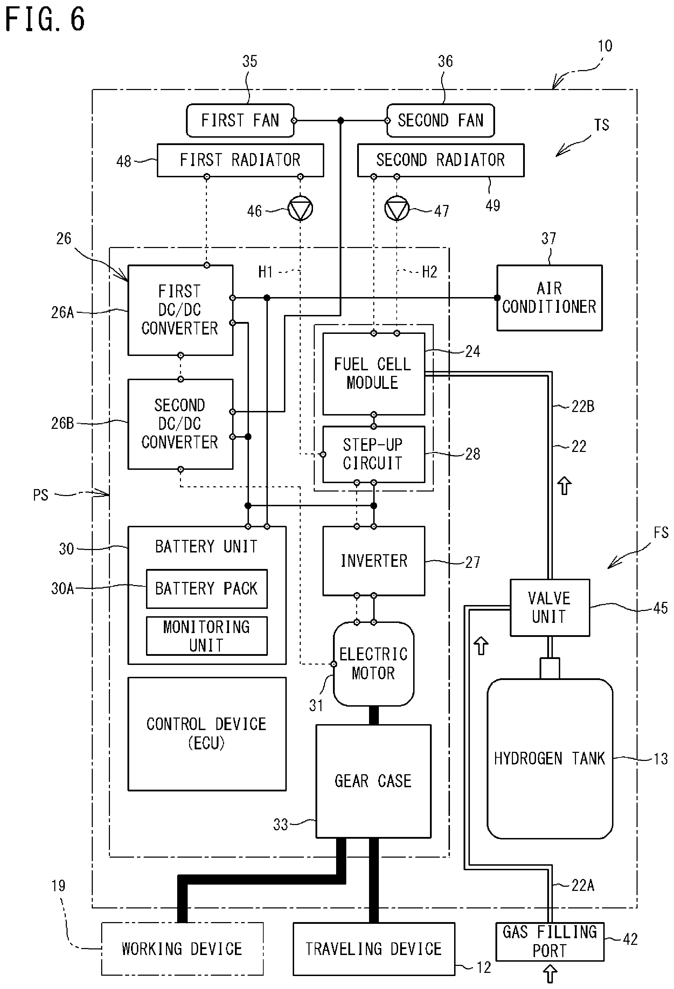

The work vehicle 10 includes a pipe 22 for hydrogen gas. The tank 13 is filled with hydrogen gas supplied thereto through a filling port 42 (see FIG. 6) connected to an end of the pipe 22. The hydrogen gas in the tank 13 is supplied to the fuel cell 24 through the pipe 22.

The work vehicle 10 includes a traveling device 12 including front wheels 12A and rear wheels 12B. The front wheels 12A and the rear wheels 12B are arranged left and right symmetrically with respect to the vehicle main body 11. The front wheels 12A and/or the rear wheels 12B are rotated by motive power from the motor 31. The front wheels 12A and/or the rear wheels 12B to be rotated by the motive power from the motor 31, i.e., the driving wheels may be crawlers (caterpillars).

### [Internal structure of work vehicle]

FIG. 5 is a perspective view illustrating an example of an internal structure of the work vehicle 10. The chassis 41 has a steel frame elongated in the front-rear direction, and includes a front frame 32 and a gear case 33. The gear case 33 is coupled to a rear portion of the front frame 32. The gear case 33 and the front frame 32 form a framework of the vehicle main body 11. The chassis 41 serves as a vehicle body frame on which the drive device 14, the driver's seat 15, the cabin 16, and the like are installed.

The installation frame 17 for the tank unit 21 is coupled to the chassis 41. The installation frame 17 supports the tank unit 21 at a position above the cabin 16. The installation frame 17 includes: a ceiling frame 17A having an approximately rectangular shape whose longer sides extend in the front-rear direction and shorter sides extend in the left-right direction; a plurality of pillars 17B supporting the ceiling frame 17A from below; and a pair of left and right reinforcement frames 17C coupled to a front end portion of the ceiling frame 17A.

The tank unit 21 is coupled to the ceiling frame 17A. The reinforcement frames 17C are reinforcing diagonal members extending from the front end portion of the ceiling frame 17A to the front frame 32 so as to tilt downward. The reinforcement frames 17C of the installation frame 17 increase the rigidity of the installation frame 17 in the front-rear direction.

The battery unit 30 is supported on the vehicle main body 11 by a support frame 37 coupled to the chassis 41. Specifically, the motor 31 is installed on the front frame 32 of the chassis 41, and the support frame 37 is mounted to a portion of the front frame 32 corresponding to the motor 31. The support frame 37 is made of , for example, a metal frame member, and is mounted to the front frame 32 in a cantilevered manner so as to protrude rightward from the front frame 32.

The gear case 33 is located rearward of the motor 31, and includes a power transmission mechanism. The power transmission mechanism includes a transmission, a clutch, and a differential gear, and reduces or increases rotation of an output shaft of the motor 31 to transmit the reduced or increased rotation to the traveling device 12.

The power transmission mechanism in the gear case 33 includes a branch mechanism configured to output part of the motive power from the motor 31 to a power take-off (PTO) shaft 44A (see FIG. 4). The PTO shaft 334 is an output shaft protruding from a rear portion of the gear case 33.

The work vehicle 10 includes a coupling device 43 (see FIGs. 3) for coupling, to a rear end of the vehicle main body 11, a working device 19 (see FIG. 6) for performing desired farmwork. The working device 19 is also referred to as an implement. The working device 19 is, for example, a cultivator, a baler, or the like.

Rotational motion of the PTO shaft 334 is transmitted to an input shaft of the working device 19 while, for example, the work vehicle 10 is traveling. The work vehicle 10 is capable of driving the working device 19 using the motive power from the motor 31 while traveling in an agricultural field or the like.

### [Functional configuration of work vehicle]

FIG. 6 is a block diagram illustrating an example of a functional configuration of the work vehicle 10. As illustrated in FIG. 6, the work vehicle 10 includes functional systems such as a fuel system FS, a power system PS, and a temperature control system TS.

The fuel system FS includes, as the constituent elements, the tank 13 and a valve unit 45. The temperature control system TS includes, as the constituent elements, the first radiator 48, the second radiator 49, and an air conditioner 37. The power system PS includes, as the constituent elements, the fuel cell 24, a step-up circuit 28, a DC/DC converter (first power converter) 26, an inverter (second power converter) 27, the motor 31, the gear case 33, and the battery unit 30.

Hereinafter, the DC/DC converter 26 is also referred to as a "converter 26". In the present embodiment, the converter 26 includes a first DC/DC converter 26A (also referred to as a "first converter 26A") and a second DC/DC converter 26B (also referred to as a "second converter 26B").

The tank 13 is coupled to a first pipe 22A and a second pipe 22B via the valve unit 45. The first pipe 22A is a gas pipe connecting the filling port 42 and the valve unit 45 to guide hydrogen gas from the filling port 42 toward the tank 13. The second pipe 22B is a gas pipe connecting the fuel cell 24 and the valve unit 45 to guide hydrogen gas in the tank 13 to the fuel cell 24.

The valve unit 45 is an assembly of valves such as an on-off valve and a reducing valve. The valve unit 45 adjusts a flow rate of hydrogen gas in the tank 13 and delivers the hydrogen gas to the fuel cell 24 in such a manner that action of each valve in the valve unit 45 is controlled.

The motor 31 includes a rotor and a stator having a plurality of coils, and drives an output shaft at a predetermined torque and a predetermined rotational speed. In the present embodiment, the work vehicle 10 includes only one motor 31, and a rotation shaft of the motor 31 is coupled to the gear case 33.

The power transmission mechanism of the gear case 33 outputs part of the motive power from the motor 31 to the traveling device 12, and outputs the remaining motive power from the motor 31 to the PTO shaft 334.

The fuel cell 24 is, for example, a battery module including a casing and a plurality of unit cells each having a positive electrode and a negative electrode and arranged and stacked in layers in the casing. The fuel cell 24 collects electric power generated by the respective unit cells to generate electric power required to drive the motor 31.

The fuel cell 24 is connected to the second radiator 49 via a cooling flow path H2. That is, a temperature of the fuel cell 24 is adjusted to a predetermined temperature using a circulating coolant supplied from the second radiator 49.

The fuel cell 24 is electrically connected to the step-up circuit 28, and the step-up circuit 28 is electrically connected to the inverter 27. The step-up circuit 28 steps up a voltage of electric power received from the fuel cell 24, and outputs the resultant electric power to the inverter 27.

The inverter 27 is electrically connected to the motor 31. The inverter 27 converts the DC electric power received from the step-up circuit 23 into three-phase AC electric power, and outputs the three-phase AC electric power to the motor 31. Electric power generated by the fuel cell 24 is stepped up and converted into AC electric power, and the AC electric power is then transmitted to the motor 31.

The work vehicle 10 includes low-voltage electrical components operable at a voltage lower than a voltage at which the motor 31 operates. These electrical components receive DC electric power stepped down by a step-down circuit.

The low-voltage electrical components include, for example, the battery unit 30, the first radiator 48, the second radiator 49, and the air conditioner 37. The step-down circuit is, for example, the converter 26. In the present embodiment, the first converter 26A and the second converter 26B each correspond to the step-down circuit.

The first converter 26A steps down a DC voltage received from the step-up circuit 28, and supplies the stepped-down voltage to the battery unit 30 and the air conditioner 37. The second converter 26B steps down a DC voltage received from the step-up circuit 28, and supplies the stepped-down voltage to the first radiator 48 and the second radiator 49.

The inverter 27 and the converter 26 (first converter 26A, second converter 26B) are mounted to the chassis 41 corresponding to the vehicle body frame (see FIG. 3), with a support structure 50. The inverter 27 and the converter 26 are installed near the driver's seat 15 (see FIG. 2).

The battery unit 30 is a power storage device configured to temporarily store electric power to be supplied to the motor 31. The battery unit 30 includes a battery pack 30A (see FIG. 6).

The battery pack 30A includes at least one battery. The battery is, for example, a rechargeable secondary battery such as a lithium-ion battery or a lead-acid battery.

As described above (see FIG. 4), the first radiator 48 is disposed forward of the fuel cell 24, and the second radiator 49 is disposed rearward of the fuel cell 24.

In addition to the fuel cell 24, the first radiator 48 and the second radiator 49 are included in a cooling system configured to cool, using a refrigerant (coolant), electrical components operable using electric power as energy, such as the motor 31, the step-up circuit 28, the inverter 27, the first converter 26A, and the second converter 26B.

In a cooling flow path H1 connected to the first radiator 48, the refrigerant is circulated by a pump 46 and is cooled by heat exchange with outside air. The first radiator 48 includes a first fan 35 for promoting the heat exchange with outside air. A temperature control unit including the first radiator 48 and the cooling flow path H1 cools, for example, the electrical components (heat-generating components) such as the motor 31, the step-up circuit 28, the inverter 27, the first converter 26A, and the second converter 26B.

In the cooling flow path H2 connected to the second radiator 49, the refrigerant is circulated by a pump 47 and is cooled by heat exchange with outside air. The second radiator 49 includes a second fan 36 for promoting the heat exchange with outside air.

A temperature control unit including the second radiator 49 and the cooling flow path H2 cools the fuel cell 24.

### [Support structure 50]

As described above (see FIG. 2), the inverter 27 and the converter 26 are installed near the driver's seat 15. The vehicle main body 11 includes the support structure 50. With the support structure 50, the converter 26 and the inverter 27 are mounted to the chassis 41 corresponding to the vehicle body frame. In the present embodiment, the converter 26 includes the first converter 26A and the second converter 26B.

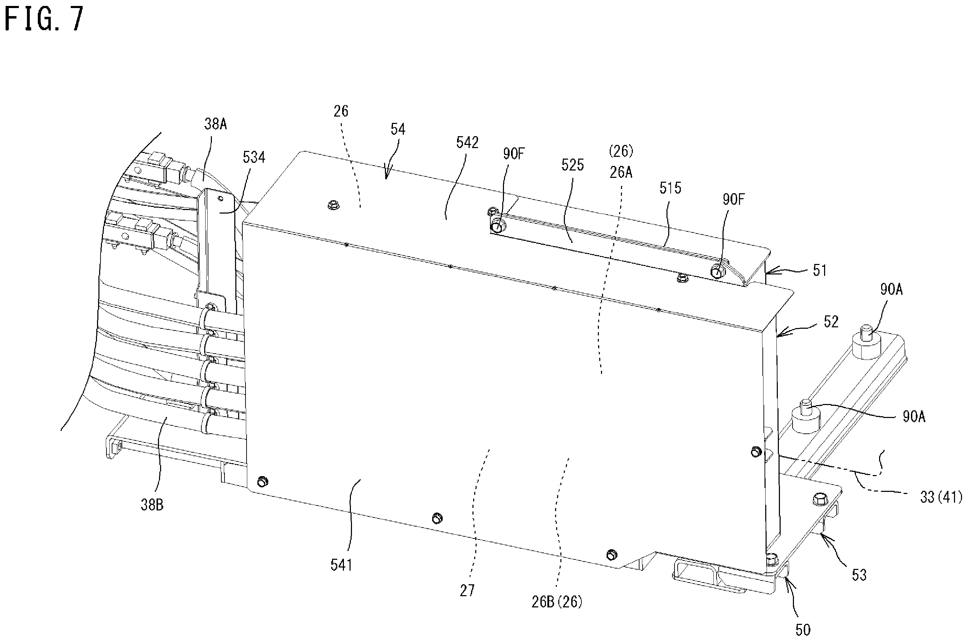

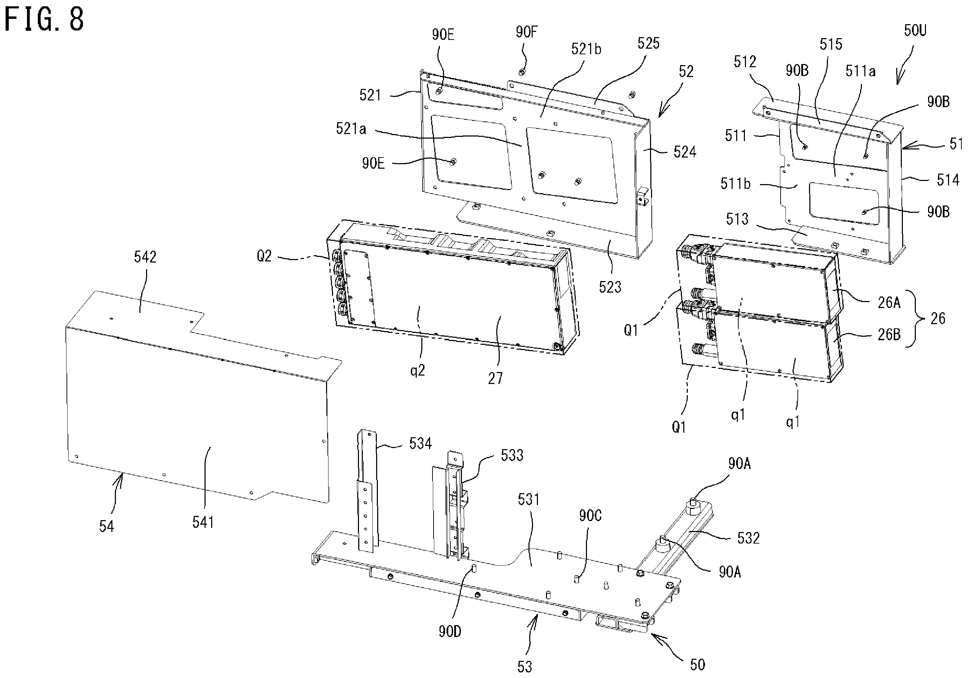

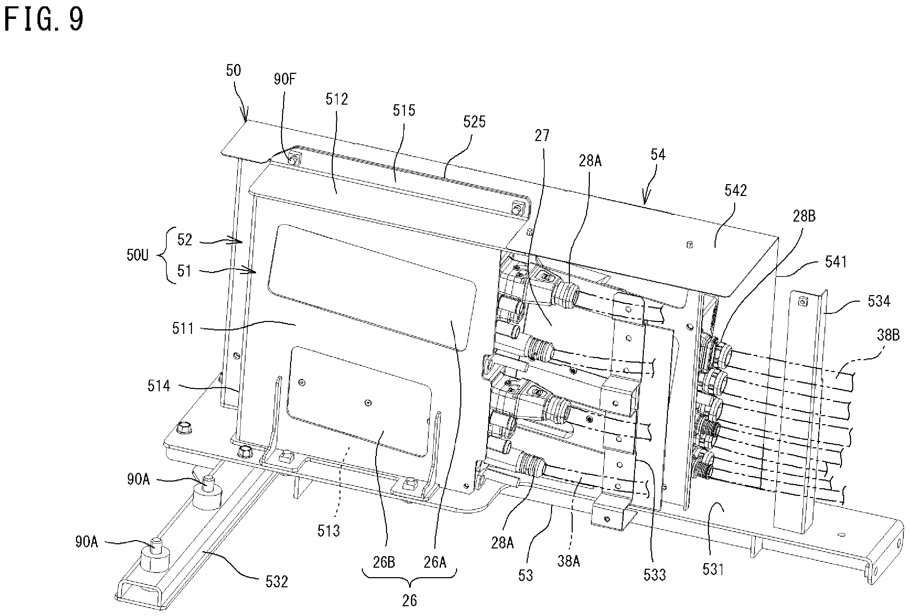

FIG. 7 is a perspective view of the support structure 50 seen from the outside in the vehicle-width direction. FIG. 8 is an exploded view of the support structure 50 illustrated in FIG. 7. FIG. 9 is a perspective view of the support structure 50 seen from the inside in the vehicle-width direction. As illustrated in FIG. 9, the converter 26 has on its front surface a plurality of terminals (connection portions) 28A to which a plurality of harnesses 38A are connected. The inverter 27 has on its front surface a plurality of terminals (connection portions) 28B to which a plurality of harnesses 38B are connected. In FIG. 9, the harnesses 38A and 38B are each indicated by an imaginary line (chain double-dashed line).

In FIG. 8, the support structure 50 includes a base portion 53, a first support portion 51, a second support portion 52, and a cover 54.

The base portion 53 is mounted to a part of the chassis 41 (see FIG. 7) corresponding to the vehicle body frame. In the present embodiment (see FIG. 3), the base portion 53 is mounted to a bottom portion of the gear case 33 of the chassis 41 with a bolt 90A (see FIG. 7). As illustrated in FIG. 8, the base portion 53 includes a base body 531 elongated in the front-rear direction and an arm 532 elongated in the vehicle-width direction. The arm 532 is a member coupling the base body 531 to the gear case 33.

The base portion 53 includes a first support post 533 and a second support post 534. The first support post 533 and the second support post 534 extend upright from the base body 531. The first support post 533 supports the harnesses 38A connected to the converter 26 (see FIG. 9). The second support post 534 supports the harnesses 38B connected to the inverter 27.

The first support portion 51 is mounted on the base portion 53 (base body 531). The first support portion 51 supports the converter 26 corresponding to the first power converter. The first support portion 51 has a frame structure formed of a metal plate. As illustrated in FIG. 8, the first support portion 51 includes a first inner frame 511, a first upper frame 512, a first lower frame 513, and a first rear frame 514 each having a plate shape.

The first lower frame 513 is placed on the base body 531 and fixed with a bolt 90C. A space surrounded by the first inner frame 511, the first upper frame 512, the first lower frame 513, and the first rear frame 514 serves as an accommodation space for the converter 26. The first support portion 51 is open forward, and the harnesses 38A (see FIG. 9) extend so as to pass through the opening.

The first support portion 51 supports the first converter 26A and the second converter 26B arranged in the up-down direction. Each of the first converter 26A and the second converter 26B is fixed to the first support portion 51 with a bolt 90B (see FIG. 8).

The first inner frame 511 includes an opening window frame 511a, and has a plurality of holes extending through the first inner frame 511 in the thickness direction for the purpose of taking a measure to dissipate heat from the converter 26.

As described above, the first support portion 51 includes the first inner frame 511 as a first upright portion extending upright from the base body 531 of the base portion 53. The first support portion 51 supports the converter 26 with the converter 26 mounted to the first inner frame 511.

The second support portion 52 is mounted on the base portion 53 (base body 531). The second support portion 52 supports the inverter 27 corresponding to the second power converter. The second support portion 52 has a frame structure formed of a metal plate. The second support portion 52 includes a second inner frame 521, a second lower frame 523, and a second rear frame 524 each having a plate shape.

The second lower frame 523 is placed on the base body 531 and fixed with a bolt 90D.

A space surrounded by the second inner frame 521, the second lower frame 523, and the second rear frame 524 serves as an accommodation space for the inverter 27. The second support portion 52 is open forward, and the harnesses 38B (see FIG. 9) extend so as to pass through the opening.

The second support portion 52 supports the inverter 27. The inverter 27 is fixed to the second support portion 52 with a bolt 90E (see FIG. 8).

The second inner frame 521 includes an opening window frame 521a, and has a plurality of holes extending through the second inner frame 521 in the thickness direction for the purpose of taking a measure to dissipate heat from the inverter 27.

As described above, the second support portion 52 includes the second inner frame 521 as a second upright portion extending upright from the base body 531 of the base portion 53. The second support portion 52 supports the inverter 27 with the inverter 27 mounted to the second inner frame 521.

The work vehicle 10 of the present embodiment includes two converters 26 and one inverter 27. The work vehicle 10 of the present embodiment may alternatively include one converter 26 and two inverters 27.

The first support portion 51 and the second support portion 52 installed on the base portion 53 are referred to as a support unit 50U (see FIG. 9). In other words, the support unit 50U includes the first support portion 51 and the second support portion 52. On the base portion 53, the first support portion 51 and the second support portion 52 are arranged side-by-side in the vehicle-width direction. The cover 54 covers the support unit 50U from a vehicle lateral side.

As illustrated in FIG. 2, the vehicle main body 11 includes the cabin 16. The support unit 50U (first support portion 51, second support portion 52) is located below the cabin 16. This configuration reduces a wiring length between the converter 26 and inverter 27 respectively supported by the first support portion 51 and second support portion 52 and the electrical components (e.g., the air conditioner 37) placed around the cabin 16.

The vehicle main body 11 includes the rear wheels 12B on both sides of the chassis 41, which corresponds to the vehicle body frame, in the vehicle-width direction (see FIG. 3). The first support portion 51 and the second support portion 52 are located between one of the pair of rear wheels 12B (left rear wheel 12B) and the chassis 41 (gear case 33) corresponding to the vehicle body frame. According to this configuration, the converter 26 and the inverter 27 are covered from both sides in the vehicle-width direction and protected from damage to be caused externally.

In order to further describe the configurations of the respective portions of the support structure 50, the shapes of the converter 26 and inverter 27 are described. As illustrated in FIG. 8, the converter 26 (first converter 26A, second converter 26B) and the inverter 27 of the present embodiment each have a box shape. The converter 26 (first converter 26A, second converter 26B) has a form that fits within a flattened virtual cuboid Q1. The inverter 27 has a form that fits within a flattened virtual cuboid Q2.

The first support portion 51 supports the converter 26 such that the cuboid Q1 of the converter 26 has a surface q1 having the largest area as a side surface oriented in the horizontal direction. Therefore, the first inner frame 511 corresponding to the first upright portion has a first mounting surface 511b facing one surface of the converter 26 having the box shape such that the one surface is mounted to the first mounting surface 511b.

The second support portion 52 supports the inverter 27 such that the cuboid Q2 of the inverter 27 has a surface q2 having the largest area as a side surface oriented in the horizontal direction. Therefore, the second inner frame 521 corresponding to the second upright portion has a second mounting surface 521b facing one surface of the inverter 27 having the box shape such that the one surface is mounted to the second mounting surface 521b.

The first support portion 51 supporting the converter 26 (specifically, the first inner frame 511 corresponding to the first upright portion) is placed so as to extend upright from the base portion 53. In addition to the first support portion 51, the second support portion 52 supporting the inverter 27 (specifically, the second inner frame 521 corresponding to the second upright portion) is placed so as to extend upright from the base portion 53. The placement of the first support portion 51 and second support portion 52 enables a reduction in size of the support structure 50 (support unit 50U) in the horizontal direction (vehicle-width direction) as illustrated in FIG. 9.

In the present embodiment (see FIG. 8), the first support portion 51 and the second support portion 52 are separate members. The first support portion 51 and the second support portion 52 are individually mountable to the base portion 53.

The first support portion 51 is fixed to the base portion 53 with the bolt 90C. The second support portion 52 is fixed to the base portion 53 with the bolt 90D. In other words, the support structure 50 includes the first bolt 90C with which the first support portion 51 is fixed to the base portion 53, and the second bolt 90D with which the second support portion 52 is fixed to the base portion 53.

The first support portion 51 supporting the converter 26 is placed so as to extend upright from the base portion 53, and the second support portion 52 supporting the inverter 27 is placed so as to extend upright from the base portion 53. The first support portion 51 and the second support portion 52 are narrow widthwise and long lengthwise.

The first support portion 51 includes a first flange plate 515, and the second support portion 52 includes a second flange plate 525. The support structure 50 includes a third bolt 90F with which the first support portion 51 and the second support portion 52 are coupled together (see FIG. 7). The first flange plate 515 and the second flange plate 525 are coupled together with the third bolt 90F. Therefore, the first support portion 51 and the second support portion 52 are stably mounted to the base portion 53 although the first support portion 51 and the second support portion 52 are narrow widthwise and long lengthwise.

The cover 54 covers the support unit 50U from the vehicle lateral side. More specifically, the cover 54 covers the support unit 50U from the outside in the vehicle-width direction. Even if foreign matter outside the vehicle main body 11 is scattered to the support unit 50U, the cover 54 protects the support unit 50U from the foreign matter.

The cover 54 includes a sidewall 541 and an upper wall 542. The sidewall 541 covers the support unit 50U from the outside in the vehicle-width direction. The upper wall 542 covers the support unit 50U from above. The cover 54 is made of a metal and is formed by bending a plate member. The upper wall 542 and the sidewall 541 are integrated. The cover 54 has a front side that is open.

As illustrated in FIG. 9, the harnesses 38A and the harnesses 38B extend so as to pass through the front opening of the cover 54.

The cover 54 covers the connection portions (terminals 28A) between the converter 26 and the harnesses 38A and the connection portions (terminals 28B) between the inverter 27 and the harnesses 38B. The connection portions between the converter 26 and the harnesses 38A and the connection portions between the inverter 27 and the harnesses 38B are covered by the cover 54 and protected from foreign matter.

The first mounting surface 511b of the first inner frame 511 and the second mounting surface 521b of the second inner frame 521 are spaced apart from each other in the width direction of the vehicle main body 11. The converter 26 is placed between the first mounting surface 511b and the second mounting surface 521b.

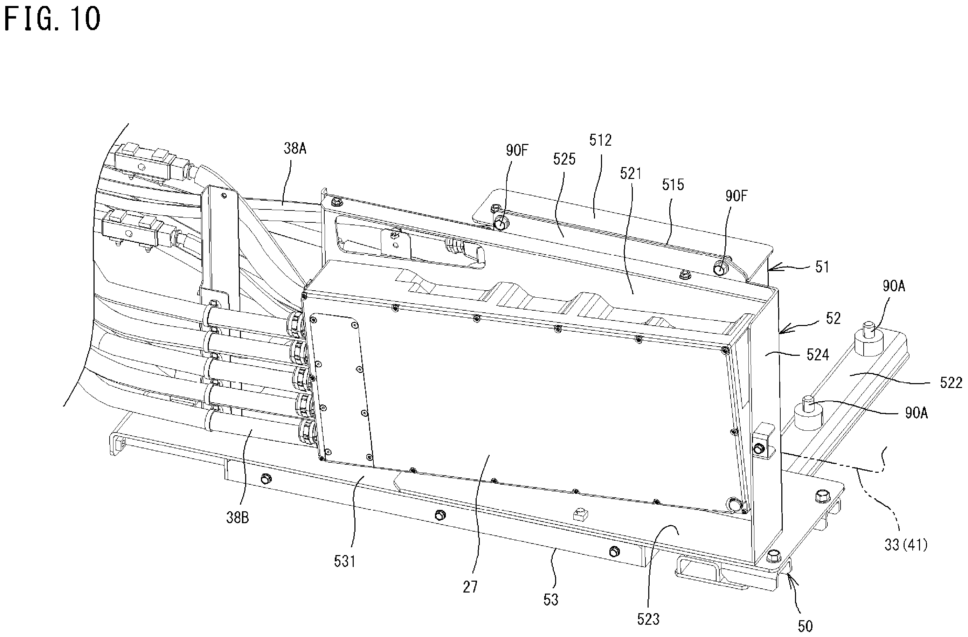

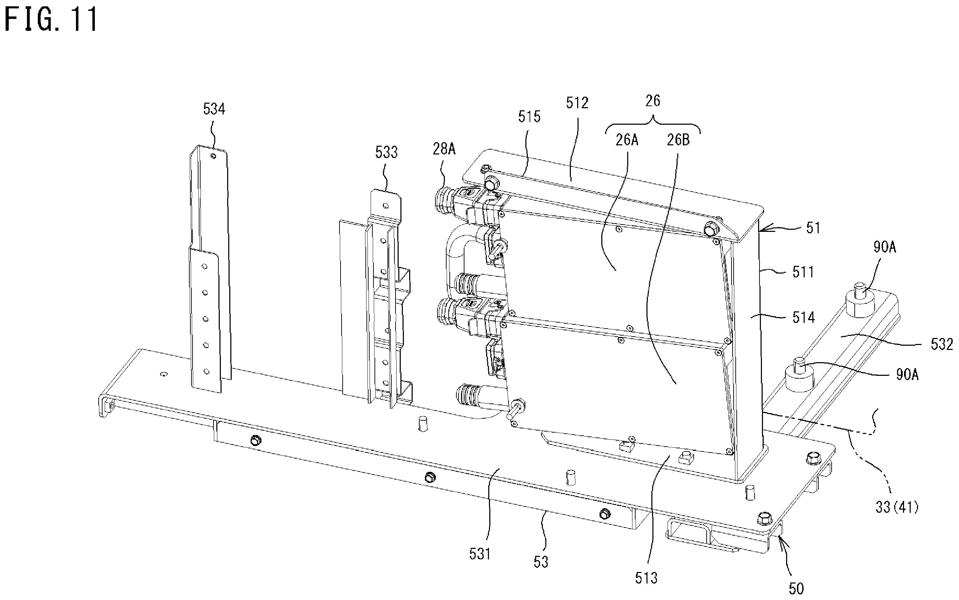

In the present embodiment (see FIG. 9), the converter 26 is located inward of the inverter 27 in the vehicle-width direction. FIG. 10 is a perspective view of the support structure 50 from which the cover 54 is removed. FIG. 11 is a perspective view of the support structure 50 from which the second support portion 52 and the inverter 27 are removed.

The second support portion 52 includes the second inner frame 521 located inward of the inverter 27 in the vehicle-width direction. The inverter 27 is disposed along the second inner frame 521. The second support portion 52 does not include a frame located outward of the inverter 27 in the vehicle-width direction. That is, the outside of the second support portion 52 in the vehicle-width direction is open with the second support portion 52 mounted to the base portion 53.

The cover 54 covers, from the outside in the vehicle-width direction, the inverter 27 supported by the second support portion 52 (see FIG. 7). According to this configuration, when the cover 54 is removed, as illustrated in FIG. 10, the inverter 27 can be visually recognized with the inverter 27 mounted to the base portion 53 with the second support portion 52. This configuration facilitates maintenance of the inverter 27.

The first support portion 51 includes the first inner frame 511 located inward of the converter 26 in the vehicle-width direction (see FIGs. 9 and 11). The two converters 26 are disposed along the first inner frame 511. As illustrated in FIG. 11, the first support portion 51 does not include a frame located outward of the converter 26 in the vehicle-width direction. That is, the outside of the first support portion 51 in the vehicle-width direction is open with the first support portion 51 mounted to the base portion 53.

According to this configuration, when the cover 54 and the second support portion 52 supporting the inverter 27 are removed, the converter 26 can be visually recognized with the converter 26 mounted to the base portion 53 with the first support portion 51. This configuration facilitates maintenance of the converter 26.

The first support portion 51 and the second support portion 52 are arranged side-by-side in the vehicle-width direction. Therefore, the second support portion 52 supporting the inverter 27 covers the converter 26 from the outside in the vehicle-width direction.

As described above (see FIG. 2), the vehicle main body 11 capable of travel includes the chassis 41 corresponding to the vehicle body frame, and the support structure 50 with which the converter 26 and the inverter 27 are mounted to the chassis 41. The support structure 50 (see FIGs. 7 and 8) includes the base portion 53 mounted to the chassis 41, the first support portion 51 mounted on the base portion 53 and supporting the converter 26, and the second support portion 52 mounted on the base portion 53 and supporting the inverter 27. The first support portion 51 supporting the converter 26 and the second support portion 52 supporting the inverter 27 are placed on and mounted to the base portion 53 mounted to the inverter 27. This configuration improves assembly workability and maintainability of the converter 26 and inverter 27.

### [Modifications of support unit 50U]

In the support structure 50 illustrated in FIGs. 8 and 9, the first support portion 51 and the second support portion 52 are separate members as described above. According to this configuration, the converter 26 and the inverter 27 are attachable and detachable individually.

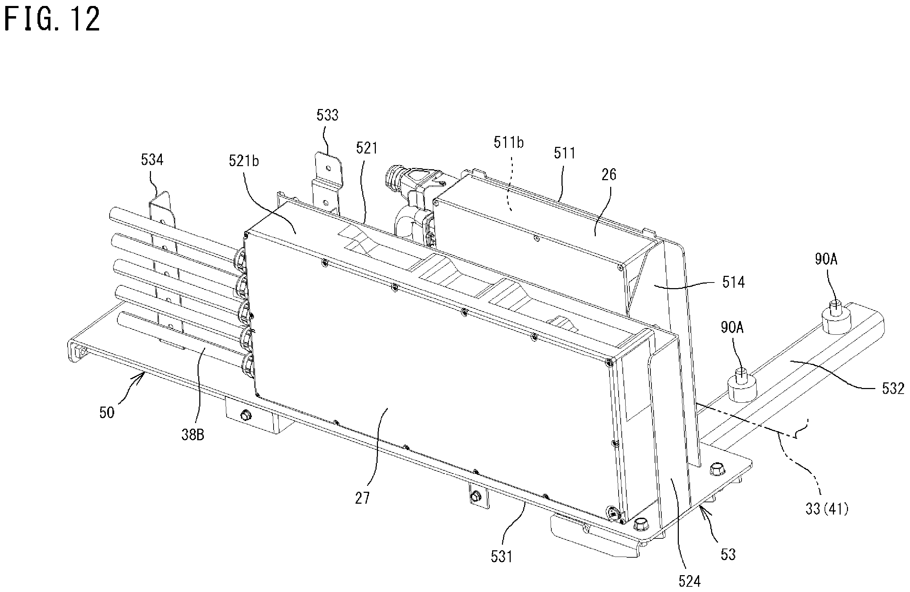

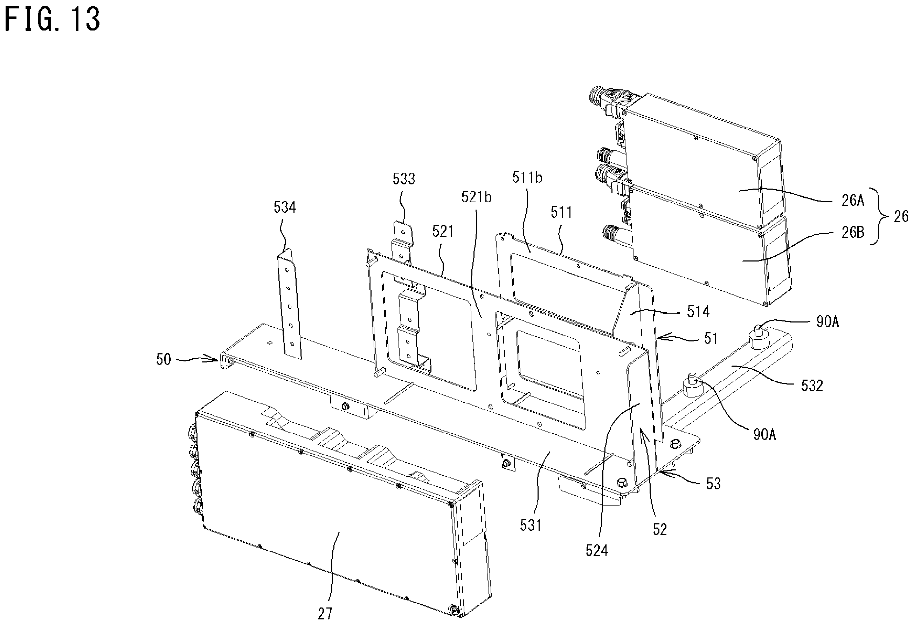

FIG. 12 is a perspective view illustrating a first modification of the support structure 50. FIG. 13 is a perspective view illustrating the support structure 50 of FIG. 12 in an exploded manner.

In the first modification, the first support portion 51, the second support portion 52, and the base body 531 corresponding to a part of the base portion 53 are integrated as a single member. The second inner frame 521 of the second support portion 52 is fixed by, for example, welding to the base body 531, and extends upright from the base body 531. The first inner frame 511 of the first support portion 51 is fixed by, for example, welding to the base body 531, and extends upright from the base body 531.

The first support portion 51, the second support portion 52, and the base body 531 are integrated, which are integrally attachable to and detachable from the vehicle main body 11 (arm 532).

In the first modification illustrated in FIGs. 12 and 13, the same constituent elements as those illustrated in FIGs. 7 and 8 are denoted by the same reference signs.

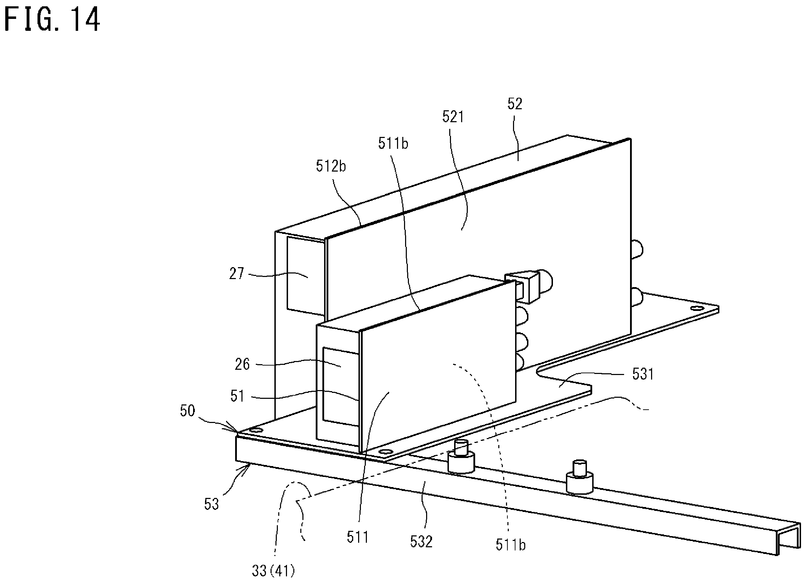

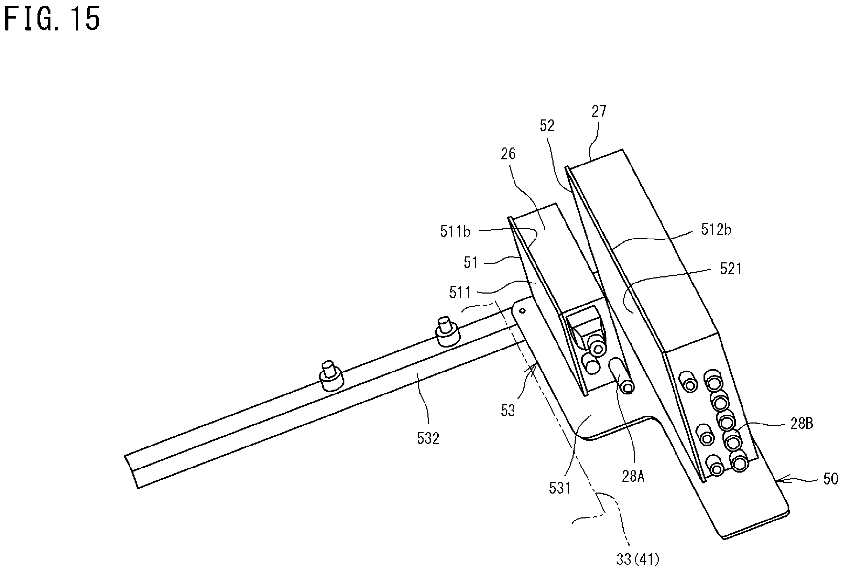

FIGs. 14 and 15 are perspective views illustrating another modification (second modification) of the support structure 50. In the second modification, similarly to the first modification, the first support portion 51, the second support portion 52, and the base body 531 corresponding to a part of the base portion 53 are integrated as a single member. The second inner frame 521 of the second support portion 52 is fixed by, for example, welding to the base body 531, and extends upright from the base body 531. The first inner frame 511 of the first support portion 51 is fixed by, for example, welding to the base body 531, and extends upright from the base body 531.

In the second modification illustrated in FIGs. 14 and 15, the same constituent elements as those illustrated in FIGs. 7 and 8 are denoted by the same reference signs. In the second modification, the number of converters 26 is one.

Also in the first modification (FIGs. 12 and 13) and the second modification (FIGs. 14 and 15), similarly to the embodiment illustrated in FIGs. 7 and 8, the support structure 50 includes the base portion 53, the first support portion 51, and the second support portion 52. The base portion 53 corresponds to a portion mounted to the chassis (vehicle body frame) 41. The base portion 53 includes the base body 531 and the arm 532.

The first support portion 51 includes the first inner frame 511 as the first upright portion extending upright from the base body 531. The first support portion 51 supports the converter 26 with the converter 26 mounted to the first inner frame 511. The second support portion 52 includes the second inner frame 521 as the second upright portion extending upright from the base body 531. The second support portion 52 supports the inverter 27 with the inverter 27 mounted to the second inner frame 521.

Also in the first modification (FIGs. 12 and 13) and the second modification (FIGs. 14 and 15), similarly to the embodiment illustrated in FIGs. 7 and 8, the converter 26 and the inverter 27 each have a box shape. The first inner frame 511 has the first mounting surface 511b facing one surface of the converter 26 having the box shape such that the one surface is mounted to the first mounting surface 511b. The second inner frame 521 has the second mounting surface 521b facing one surface of the inverter 27 having the box shape such that the one surface is mounted to the second mounting surface 521b. The first mounting surface 511b and the second mounting surface 521b are spaced apart from each other in the width direction of the vehicle main body 11. The converter 26 is placed between the first mounting surface 511b and the second mounting surface 521b. The inverter 27 is placed outside the second mounting surface 512b in the vehicle-width direction.

### [Others]

The foregoing embodiments are in all aspects illustrative and not restrictive. The scope of the present invention is defined by the claims rather than the foregoing embodiments, and includes all modifications within the scope of the configurations recited in the claims and their equivalences.

Reference signs used in Chapter 1 are used only in Chapter 1 and are not related to reference signs in other chapters.

### [Reference signs list]

- 10: work vehicle (work machine)
- 11: vehicle main body
- 12B: rear wheel
- 16: cabin
- 24: fuel cell
- 26: converter (first power converter)
- 26A: first converter (first power converter)
- 26B: second converter (first power converter)
- 27: inverter (second power converter)
- 28A: terminal (connection portion)
- 28B: terminal (connection portion)
- 30A: battery pack (battery)
- 31: motor
- 38A: harness
- 38B: harness
- 41: chassis (vehicle body frame)
- 50: support structure
- 50U: support unit
- 51: first support portion
- 52: second support portion
- 53: base portion
- 54: cover
- 90C: bolt (first bolt)
- 90D: bolt (second bolt)
- 90F: third bolt
- 511: first inner frame (first upright portion)
- 511b: first mounting surface
- 521: second inner frame (second upright portion)
- 521b: second mounting surface

### <Chapter 2>

### <Problems to be solved by the present disclosure>

A conventional work vehicle includes many instruments such as an auxiliary device associated with a fuel cell. Accordingly, there is a problem that these instruments mounted on the vehicle cause upsizing of the entire work vehicle.

An object of the present disclosure is to suppress upsizing of a work vehicle including a fuel cell.

### <Advantageous effect of the present disclosure>

According to the present disclosure, it is possible to suppress upsizing of a work vehicle including a fuel cell.

### <Outline of embodiments of the present disclosure>

An outline of below-listed embodiments of the present disclosure is described.
(1) A work vehicle of the present embodiment includes: a motor; a working device configured to operate using motive power from the motor; a vehicle body including a support body supporting a transmission shaft configured to transmit the motive power from the motor to the working device, and a pair of longitudinal frames coupled to a front side of the support body and spaced apart from each other in a vehicle-width direction; an electrical device including a battery unit configured to store electric power to be supplied to the motor; a fuel cell disposed above the pair of longitudinal frames and configured to generate electric power to be stored in the battery unit; an auxiliary device associated with the fuel cell; and a hood covering the fuel cell, wherein at least one of the electrical device and the auxiliary device, is disposed between the pair of longitudinal frames.

According to this work vehicle, in the vehicle body, a space between the pair of longitudinal frames above which the fuel cell is disposed can be effectively utilized as a space where at least one instrument, of the electrical device and the auxiliary device, is disposed. This configuration suppresses upsizing of the work vehicle including the fuel cell.

(2) In the work vehicle described in (1), preferably, the at least one instrument is disposed between the pair of longitudinal frames and below the fuel cell.

In this case, a space between the pair of longitudinal frames and below the fuel cell can be effectively utilized as a space where at least one instrument, of the electrical device and the auxiliary device, is disposed.

(3) In the work vehicle described in (1) or (2), preferably, the electrical device includes the battery unit, an inverter configured to convert DC electric power into AC electric power and output the AC electric power to the motor, and a voltage converter configured to step down electric power received from the battery unit, and the at least one instrument disposed between the pair of longitudinal frames is one of the battery unit, the inverter, and the voltage converter.

In this case, since one of the battery unit, the inverter, and the voltage converter each corresponding to the electrical device is disposed between the pair of longitudinal frames, the space between the pair of longitudinal frames can be effectively utilized as a space where the electrical device is disposed. In a case where the inverter is disposed between the pair of longitudinal frames, a wiring length between the fuel cell and the inverter can be reduced. In a case where the battery unit and the voltage converter are disposed between the pair of longitudinal frames, a wiring length between the battery unit and the voltage converter can be reduced.

(4) In the work vehicle described in (1) or (2), preferably, the auxiliary device includes: a radiator configured to cool a coolant; a fan configured to supply an airflow to the radiator; an air cleaner configured to purify air to be supplied to the fuel cell; an ion exchanger configured to remove an ion from the coolant; and a hydrogen detector configured to detect hydrogen leaking from a hydrogen supply flow path to the fuel cell, and the at least one instrument disposed between the pair of longitudinal frames is one of the radiator, the fan, the air cleaner, the ion exchanger, and the hydrogen detector.

In this case, since one of the radiator, the fan, the air cleaner, the ion exchanger, and the hydrogen detector each corresponding to the auxiliary device is disposed between the pair of longitudinal frames, the space between the pair of longitudinal frames can be effectively utilized as a space where the auxiliary device is disposed. In a case where the air cleaner is disposed between the pair of longitudinal frames, an air flow path length between the air cleaner and the fuel cell can be reduced. In a case where the ion exchanger is disposed between the pair of longitudinal frames, a coolant flow path length between the ion exchanger and the fuel cell can be reduced.

### <Details of embodiments of the present disclosure>

Details of embodiments of the present disclosure are described below with reference to the drawings. It should be noted that at least some of the embodiments described below may be arbitrarily combined with each other.

### [Overall configuration of work vehicle]

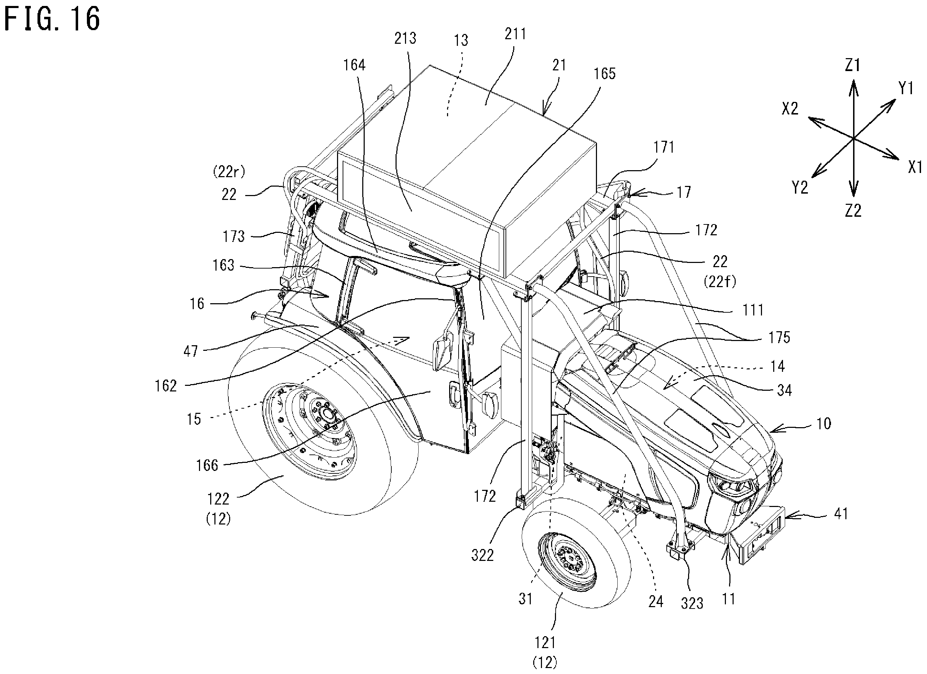

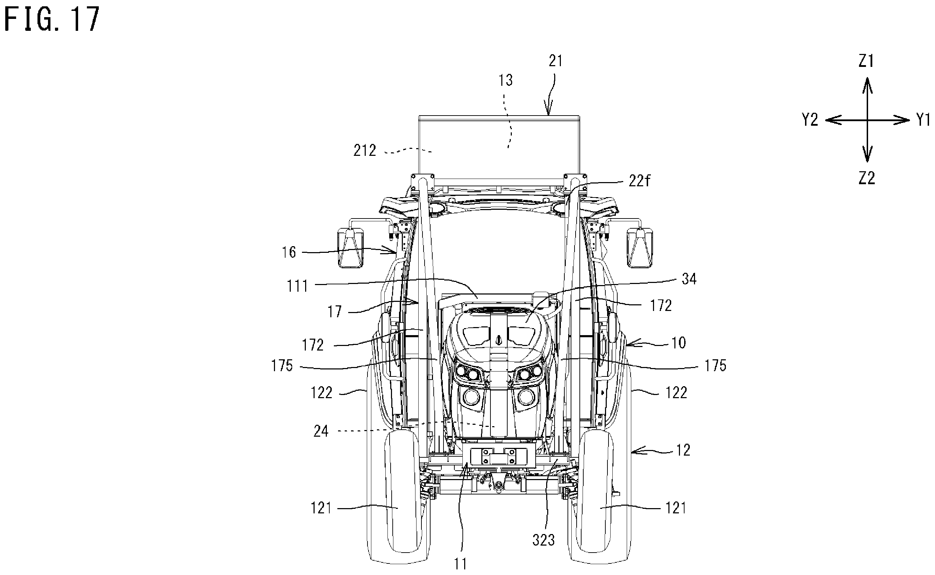

FIG. 16 is a perspective view illustrating a work vehicle according to an embodiment of the present disclosure. FIGs. 17, 18, 19, 20, and 21 are respectively a front view, a rear view, a side view (right side view), a side view (left side view), and a plan view of the work vehicle illustrated in FIG. 16.

A work vehicle 10 of the present embodiment is a vehicle that can be used for farmwork. The work vehicle 10 illustrated in FIG. 16 is a tractor. The work vehicle is not limited to a tractor. Examples of the work vehicle according to the present disclosure may include an agricultural machine different from a tractor, a construction machine, a utility vehicle, and the like.

The following terminology defines the directions of the work vehicle 10 of the present disclosure. The term "front" refers to the direction in which the work vehicle 10 travels forward. The term "rear" refers to the direction in which the work vehicle 10 travels backward. The term "left" refers to the left side when the work vehicle 10 is directed forward. The term "right" refers to the right side when the work vehicle 10 is directed forward. The term "vehicle front-rear direction" refers to the front-rear direction of the work vehicle 10. The term "vehicle-width direction" refers to the left-right direction perpendicular to the vehicle front-rear direction. The term "up-down direction" refers to the direction perpendicular to both the vehicle front-rear direction and the vehicle-width direction. The up-down direction is also referred to as the height direction.

Each drawing depicts orthogonal three-dimensional coordinates. In each drawing, arrow X1 indicates the forward direction, and arrow X2 indicates the rearward direction. Also in each drawing, arrow Y1 indicates the leftward direction, and arrow Y2 indicates the rightward direction. Also in each drawing, arrow Z1 indicates the upward direction, and arrow Z2 indicates the downward direction.

The work vehicle 10 illustrated in FIG. 16 includes a vehicle body 11, a traveling device 12 supporting the vehicle body 11 in a travelable manner, a driver's seat 15, a cabin 16, a tank unit 21, a fuel cell (fuel cell module) 24, a battery unit 30, and an electric motor 31. The tank unit 21 includes a tank 13 configured to store fuel. The fuel is in a liquid or gaseous state, and examples of the fuel include hydrogen, methane, carbon monoxide (CO), and the like. In the present embodiment, the tank 13 stores hydrogen gas.

The work vehicle 10 of the present embodiment is an FCV and travels using electric power generated from hydrogen and oxygen by a fuel cell 24. The fuel cell 24 generates electric power to be stored in the battery unit 30. The fuel cell 24 may generate electric power using methane or carbon monoxide (CO) as fuel. Electric power stored in the battery unit 30 is supplied to the motor 31.

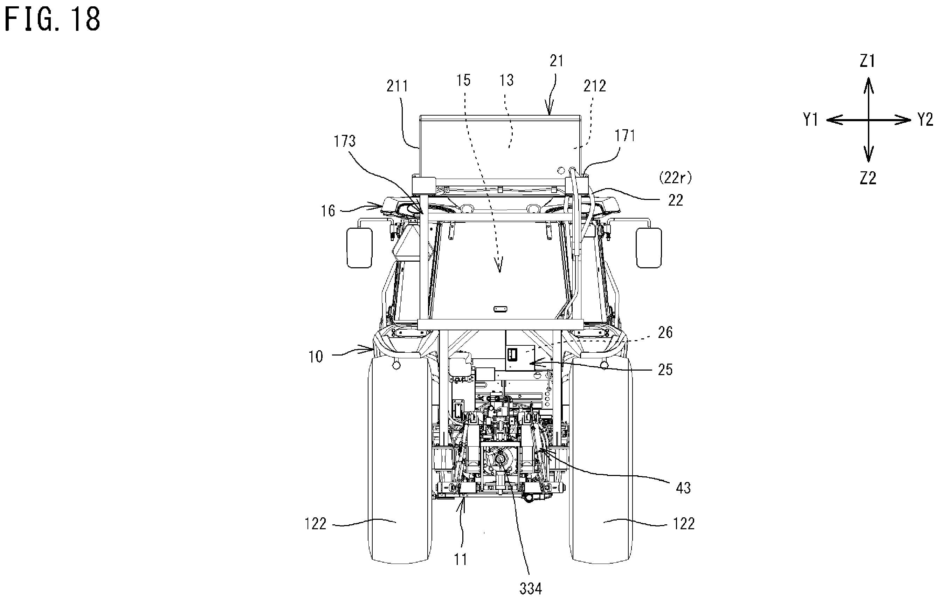

The work vehicle 10 includes pipes 22 for hydrogen gas (hydrogen pipes) and a filling unit 25 (see FIG. 18). The filling unit 25 has a filling port 26 (receptacle) to which a filling nozzle of a hydrogen gas supply device (not illustrated) is connected. The hydrogen gas supply device is provided separately from the work vehicle 10. Hydrogen gas supplied from the hydrogen gas supply device through the filling port 26 flows through one of the pipes 22 (rear pipe 22r) and reaches the tank 13. The hydrogen gas stored in the tank 13 flows through the other pipe 22 (front pipe 22f) and reaches the fuel cell 24.

The work vehicle 10 (see FIG. 16) includes an installation frame 17. The installation frame 17 is a frame with which the tank unit 21 (the tank 13) is installed on the vehicle body 11. The specific configuration of the installation frame 17 is described below.

### [Vehicle body]

The vehicle body 11 includes a chassis 41, a hood 34, a cover 111, and fenders 47. The fenders 47 cover rear wheels 122 from above.

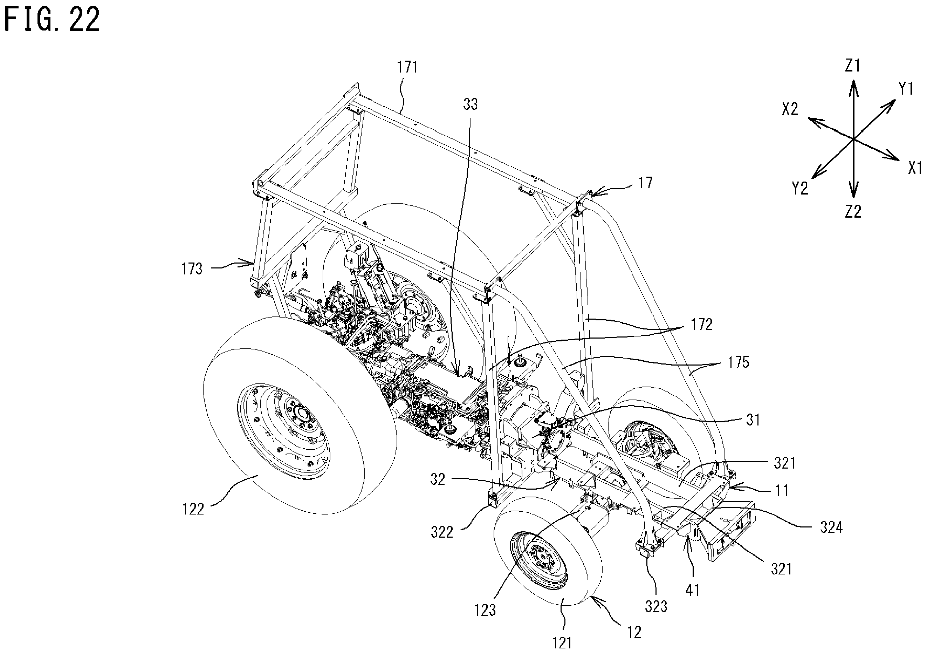

The chassis 41 supports the traveling device 12, the cabin 16, the fuel cell 24, the battery unit 30, and the motor 31. FIG. 22 is a partially exploded perspective view of the work vehicle 10 illustrated in FIG. 16. The chassis 41 is located at a center in the vehicle-width direction, and has a shape elongated in the vehicle front-rear direction. The chassis 41 includes a front frame 32 constituting a front portion of the chassis 41, and a transmission case (support body) 33 constituting a rear portion of the chassis 41.

The front frame 32 is a combination of, for example, frame members made of a metal. The front frame 32 of the present embodiment includes a pair of longitudinal frames 321, a first lateral frame 322, a second lateral frame 323, and a third lateral frame 324. The pair of longitudinal frames 321 are coupled to a front side of the transmission case 33. The pair of longitudinal frames 321 are spaced apart from each other in the vehicle-width direction, and extend in the vehicle front-rear direction.

The first lateral frame 322 is fixed to rear portions of the pair of longitudinal frames 321 at a position rearward of front wheels 121. The motor 31 is installed on the rear portions of the pair of longitudinal frames 321 and on the first lateral frame 322. The second lateral frame 323 is fixed to front portions of the pair of longitudinal frames 321 at a position forward of the front wheels 121. Both end portions of each of the first lateral frame 322 and the second lateral frame 323 in the vehicle-width direction extend outward of the pair of longitudinal frames 321 in the vehicle-width direction. The third lateral frame 324 couples front ends of the pair of longitudinal frames 321 together. The third lateral frame 324 is equal in dimension in the vehicle-width direction to the pair of longitudinal frames 321.

The transmission case 33 includes a box body made of a metal. The transmission case 33 is coupled to a rear side of the front frame 32. The transmission case 33 and the front frame 32 form a framework of the vehicle body 11. A power transmission mechanism is accommodated in the transmission case 33. The power transmission mechanism includes a transmission, a clutch, a differential gear, and the like. The power transmission mechanism decreases or increases a rotation speed of an output shaft of the motor 31, and outputs the resultant motive power to the traveling device 12 (front wheels 121 and/or rear wheels 122).

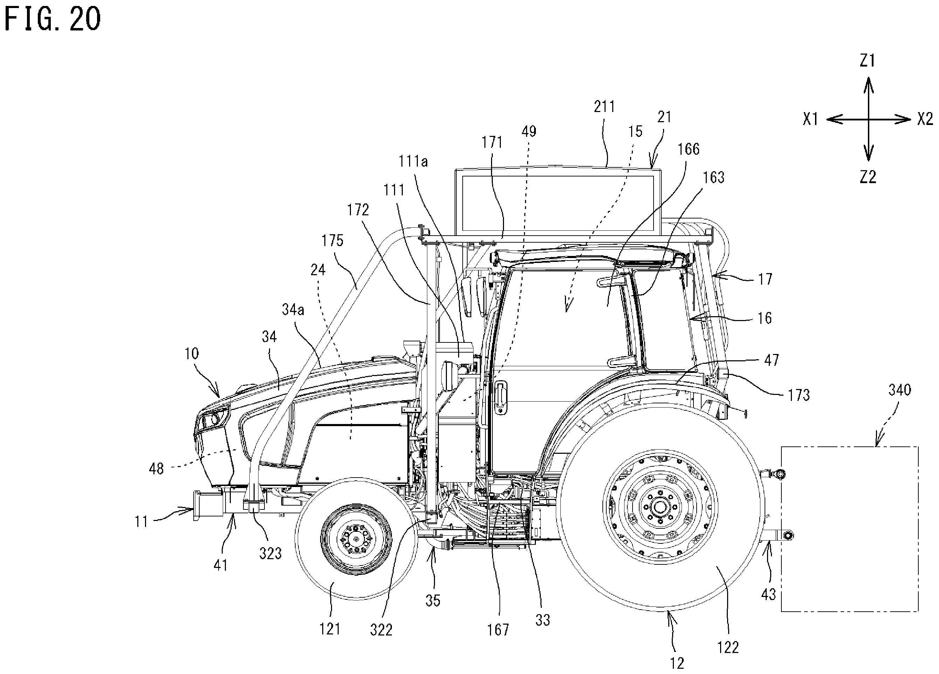

The power transmission mechanism outputs part of the motive power from the motor 31 to a PTO shaft (transmission shaft) 334 (see FIG. 18). The PTO shaft 334 is an output shaft supported on a rear portion of the transmission case 33. The work vehicle 10 includes a working device 340 (see FIG. 20) and a coupling device 43 for coupling the working device 340 to a rear end of the vehicle body 11. The PTO shaft 334 transmits the motive power from the motor 31 to the working device 340 coupled to the coupling device 43. The working device 340 operates using the motive power from the motor 31. Examples of the working device 340 include a cultivator and the like. FIGs. 16 to 19 and FIGs. 21 to 23 do not illustrate the working device 340.

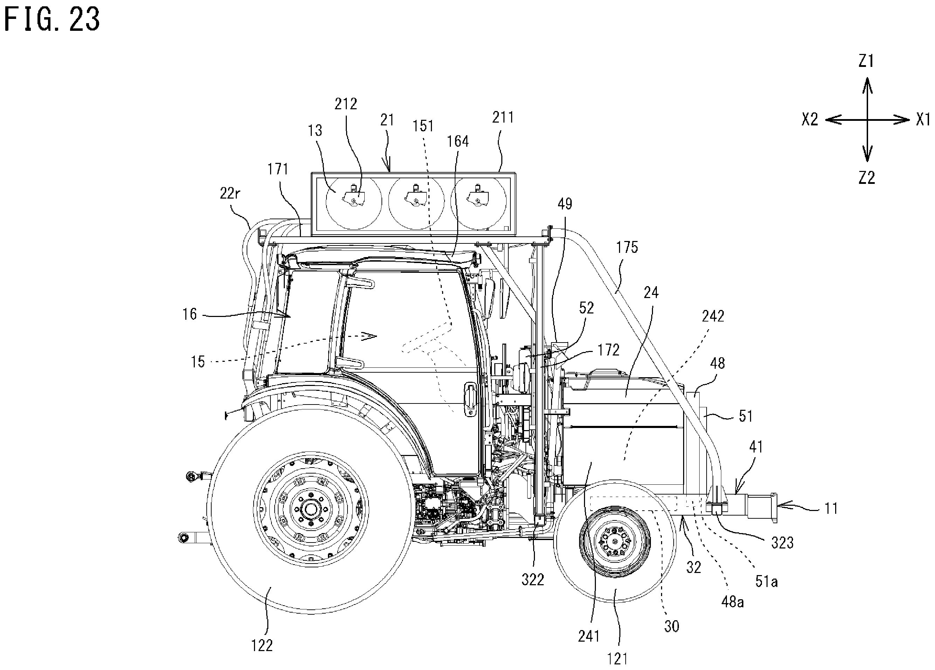

FIG. 23 is a right side view illustrating the work vehicle 10 from which the hood 34, the cover 111, and a part of a tank case 211 of the tank unit 21 are removed. A first radiator 48, the fuel cell 24, and a second radiator 49 are installed on the front frame 32 of the chassis 41 with the first radiator 48, the fuel cell 24, and the second radiator 49 arranged in this order from the front side to the rear side.

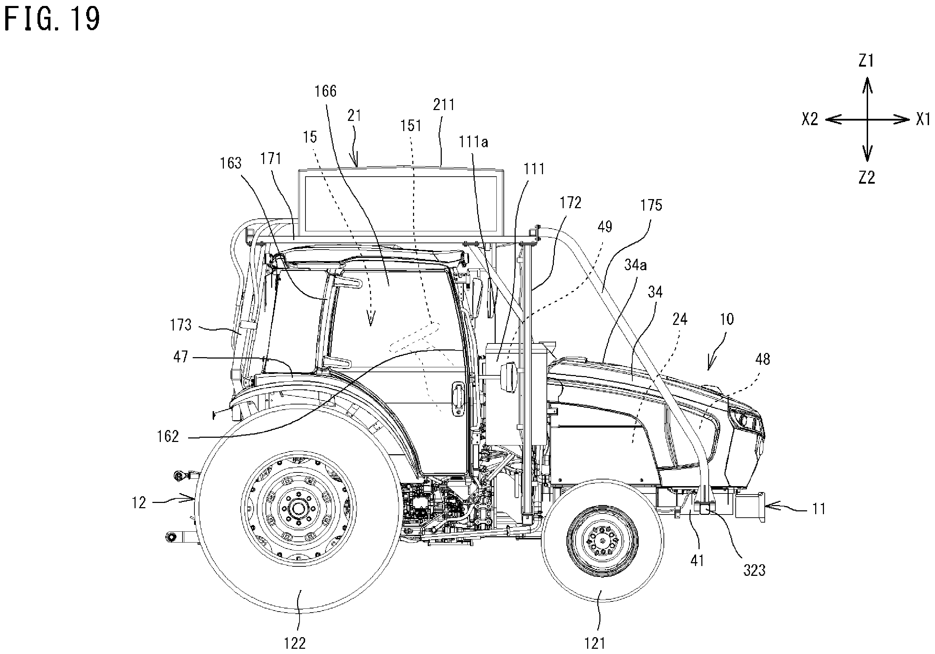

As illustrated in FIGs. 19 and 23, the hood 34 and the cover 111 cover installed components located near the front of the vehicle body 11. The hood 34 covers the fuel cell 24 and the first radiator 48 from above and laterally in the vehicle-width direction. The cover 111 covers the second radiator 49, which is located rearward of the fuel cell 24, from above and laterally in the vehicle-width direction.

An upper surface 111a of the cover 111 is higher in height than an upper surface 34a of the hood 34, but is lower in height than an upper end of a steering wheel 151 to be operated for the sake of steering by an operator sitting in the driver's seat 15. The upper surface 34a of the hood 34 is gradually inclined downward from the rear toward the front. This configuration is less likely to obstruct the field of view of the operator sitting in the driver's seat 15.

### [Driver's seat and cabin]

The driver's seat 15 and the cabin 16 are disposed on the chassis 41 and located near the rear (see FIG. 16). The cabin 16 includes the driver's seat 15 and the steering wheel 151.

The cabin 16 includes front pillars 162 located forward of the driver's seat 15, rear pillars 163 located rearward of the driver's seat 15, and a roof 164 located above the driver's seat 15. One of the front pillars 162 is disposed diagonally in front to the left of the driver's seat 15, and the other front pillar 162 is disposed diagonally in front to the right of the driver's seat 15. One of the rear pillars 163 is disposed diagonally behind to the left of the driver's seat 15, and the other rear pillar 163 is disposed diagonally behind to the right of the driver's seat 15. The roof 164 is supported by the front pillars 162 and the rear pillars 163.

The cabin 16 includes a transparent windshield 165 located forward of the driver's seat 15, and transparent side windows 166 respectively located leftward and rightward of the driver's seat 15. The windshield 165 is disposed between the left and right front pillars 162. The left side window 166 is disposed between the left front pillar 162 and the left rear pillar 163, and the right side window 166 is disposed between the right front pillar 162 and the right rear pillar 163. The side windows 166 are openable and closable, and each function as a door through which the operator enters and leaves the cabin 16.

The cabin 16 has a step 167 on its one side (left side) in the vehicle-width direction (see FIG. 20). The step 167 is a member on which the operator puts his/her foot when entering and leaving the cabin 16.

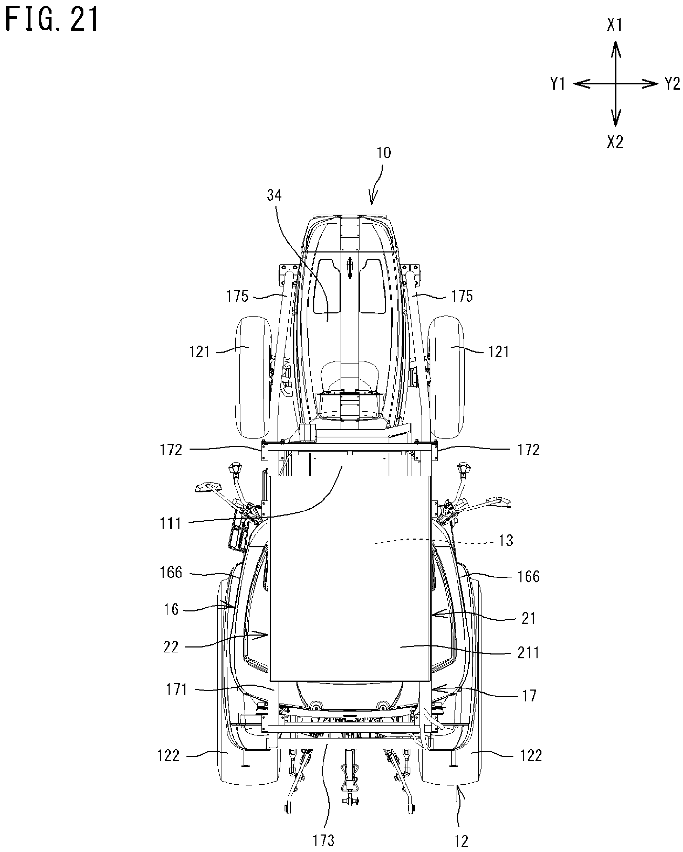

The cover 111 and the hood 34 are disposed forward of the cabin 16. As illustrated in FIGs. 17 and 21, each of the cover 111 and the hood 34 is smaller in dimension in the vehicle-width direction than the cabin 16. The hood 34 is smaller in dimension in the vehicle-width direction than the cover 111.

The work vehicle 10 of the present embodiment includes the cabin 16, but does not necessarily include the cabin 16. The work vehicle 10 may include, in place of the cabin 16, a canopy or a ROPS. If the work vehicle 10 does not include the cabin 16, the tank unit 21 is installed on the installation frame 17 and is located above the driver's seat 15.

### [Traveling device]

As illustrated in FIGs. 21 and 22, the traveling device 12 includes the front wheels 121 and the rear wheels 122. The front wheels 121 are respectively disposed leftward and rightward of a front portion of the vehicle body 11. The left and right front wheels 121 are rotatably supported at both ends of an axle 123 extending in the vehicle-width direction. The axle 123 is disposed below the pair of longitudinal frames 321 of the vehicle body 11 and is supported by the pair of longitudinal frames 321. The rear wheels 122 are respectively disposed leftward and rightward of a rear portion of the vehicle body 11. The maximum dimension between the left and right rear wheels 122 in the vehicle-width direction is larger than the maximum dimension between the left and right front wheels 121 in the vehicle-width direction. The maximum dimension between the left and right rear wheels 122 in the vehicle-width direction corresponds to the maximum width dimension of the work vehicle 10.

The front wheels 121 and/or the rear wheels 122 are rotated using the motive power from the motor 31. The front wheels 121 and/or the rear wheels 122 to be rotated using the motive power from the motor 31, i.e., the driving wheels may be crawlers (caterpillars).

As illustrated in FIG. 23, the fuel cell 24 is disposed above the pair of longitudinal frames 321 between the first lateral frame 322 and the second lateral frame 323 in the front frame 32 of the chassis 41. The motor 31 is located rearward of the fuel cell 24 and below the second radiator 49. The motor 31 includes a rotor configured to rotate and a stator including a plurality of coils. The motor 31 includes an output shaft coupled to the power transmission mechanism in the transmission case 33 (see FIG. 22). The battery unit 30 is located below the fuel cell 24. Details of the battery unit 30 will be described later.

The fuel cell 24 generates electric power using hydrogen gas supplied from the tank 13 as fuel to obtain electric power for rotating the motor 31. The fuel cell 24 includes a cell casing 241 having an approximately rectangular box shape, and a fuel cell stack 242 disposed in the cell casing 241. The fuel cell stack 242 includes a plurality of battery cells. The plurality of battery cells each include a positive electrode and a negative electrode. The plurality of battery cells are in a stacked state. Electric power is generated by each of the plurality of battery cells and is collectively output to the battery unit 30.

### [Tank unit]

The tank unit 21 (see FIG. 23) includes the tank 13, a tank case 211 accommodating the tank 13, and a valve unit 212. The tank 13 is a high-pressure container having an approximately cylindrical shape. The tank 13 is made of, for example, a fiberreinforced resin reinforced with carbon fibers or glass fibers. In the present embodiment, three tanks 13 each having a cylindrical shape are fixed to the tank case 211 with their axial directions oriented in parallel with the vehicle-width direction. The number of tanks 13 is not limited to three.

The tank case 211 is a box body capable of accommodating the tank(s) 13. The tank case 211 includes an openable/closable door 213 (see FIG. 16) disposed on one side or each side of the tank case 211 in the vehicle-width direction, so that the tank case 211 is openable in the vehicle-width direction. The tank case 211 is disposed above the roof 164, i.e., spaced apart from the roof 164 in the up-down direction. The tank case 211 is fixed to an upper frame portion 171 of the installation frame 17. The tank case 211 is made of a metal such as aluminum or steel to protect the tank 13 from external thermal and physical influences.

The tank 13 is disposed above the cabin 16 (driver's seat 15). Therefore, the fuel cell 24, the filling unit 25, the motor 31, and the battery unit 30 are arranged in the vehicle body 11 with a great degree of freedom. In a case where a conventional internal combustion engineequipped work vehicle is converted into the work vehicle 10 including the fuel cell 24 and the motor 31, which is described in the present embodiment, there is no necessity to largely change the arrangement of the respective components.

The tank 13 is coupled to the rear pipe 22r and the front pipe 22f via the valve unit 212 (see FIG. 23). The rear pipe 22r (see FIG. 18) is a gas inlet channel connecting the filling port 26 for hydrogen gas and the valve unit 212 to guide the hydrogen gas from the filling port 26 toward the tank 13. The front pipe 22f (see FIG. 16) is a gas outlet channel connecting the fuel cell 24 and the valve unit 212 to guide the hydrogen gas in the tank 13 toward the fuel cell 24. The hydrogen gas that is introduced from the outside of the vehicle through the filling port 26 is stored in the tank 13 and is supplied to the fuel cell 24. The valve unit 212 includes, for example, an on-off valve and a reducing valve. The valve unit 212 adjusts a flow rate of the hydrogen gas stored in the tank 13 to a predetermined value. The hydrogen gas the flow rate of which has been adjusted is guided to the fuel cell 24 through the front pipe 22f.

### [Installation frame]

As illustrated in FIGs. 16 and 22, the installation frame 17 is a frame structure with which the tank 13 is installed on the vehicle body 11. The installation frame 17 of the present embodiment includes an upper frame portion 171, a pair of front frame portions 172, a rear frame portion 173, and a pair of reinforcement frame portions 175.

The upper frame portion 171 has a rectangular frame shape, and is located above the cabin 16. The tank case 211 is mounted to the upper frame portion 171. In other words, the upper frame portion 171 supports the tank 13 via the tank case 211. The upper frame portion 171 is supported by the front frame portions 172, the rear frame portion 173, and the reinforcement frame portions 175.

The pair of front frame portions 172 extend in the up-down direction at a position forward of the cabin 16 and outside the vehicle body 11 in the vehicle-width direction. The pair of front frame portions 172 have upper ends respectively fixed to front left and right corners of the upper frame portion 171. The pair of front frame portions 172 have lower ends respectively fixed to both ends of the first lateral frame 322 of the chassis 41 in the vehicle-width direction.

The rear frame portion 173 is located rearward of the cabin 16. The rear frame portion 173 is constituted of a plurality of frame members in a lattice shape. The rear frame portion 173 has an upper end fixed to rear left and right corners of the upper frame portion 171. The rear frame portion 173 has a lower end fixed to the chassis 41. The filling unit 25 is disposed on the rear frame portion 173 (see FIG. 18).

The pair of reinforcement frame portions 175 are reinforcing members for receiving inertial force that causes the upper frame portion 171 and the tank case 211 to move forward when the traveling work vehicle 10 stops. The pair of reinforcement frame portions 175 are located forward of the front frame portions 172 and on both sides of the hood 34 in the vehicle-width direction. The pair of reinforcement frame portions 175 have upper ends respectively fixed to the front left and right corners of the upper frame portion 171. The pair of reinforcement frame portions 175 have lower ends respectively fixed to both ends of the second lateral frame 323 of the chassis 41 in the vehicle-width direction (see FIG. 17).

### [Electrical instruments]

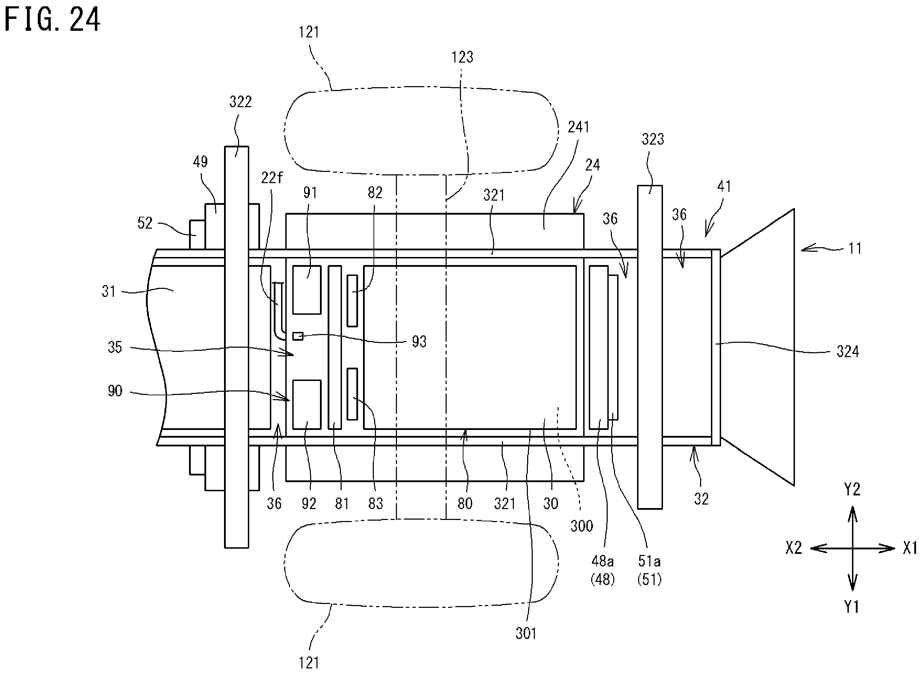

FIG. 24 is a schematic bottom view of a front portion of the work vehicle 10 illustrated in FIG. 16 as seen from below. FIG. 24 does not illustrate the hood 34 and the cover 111. The work vehicle 10 includes electrical devices 80 disposed on the front frame 32 of the chassis 41. The electrical devices 80 include the battery unit 30, an inverter 81, a first voltage converter 82, and a second voltage converter 83. Each of these instruments 30, 81, 82, and 83 is mounted to the pair of longitudinal frames 321 of the front frame 32.

The battery unit 30 stores electric power to be supplied to the motor 31. The battery unit 30 includes a battery (battery pack) 300 and a battery housing 301 accommodating the battery 300. The battery 300 temporarily stores electric power generated by the fuel cell 24, and outputs the stored electric power to an electric equipment such as the motor 31. The battery 300 includes a plurality of battery cells. The battery 300 is a rechargeable secondary battery such as a lithium-ion battery or a lead-acid battery. The battery housing 301 has a cuboid shape elongated in the vehicle front-rear direction.

The battery unit 30 is connected to the inverter 81 via a junction box (not illustrated). The fuel cell 24 is connected to the inverter 81 via a step-up circuit (not illustrated). The inverter 81 is electrically connected to the motor 31. The inverter 81 converts DC electric power output from the step-up circuit into AC electric power, and outputs the AC electric power to the motor 31.

The first voltage converter 82 and the second voltage converter 83 constitute a step-down circuit configured to step down electric power received from the battery unit 30. The first voltage converter 82 is, for example, a 12-V DC/DC converter. The second voltage converter 83 is, for example, a 24-V DC/DC converter. The battery unit 30 is connected to each of the first voltage converter 82 and the second voltage converter 83 via the junction box.

The work vehicle 10 includes a low-voltage electrical component operable at a voltage lower than a voltage at which the motor 31 operates. In the present embodiment, examples of the low-voltage electrical component include the radiators 48 and 49, an air conditioner (not illustrated), and the like to be described later. Electric power stepped down by a step-down circuit (voltage converter 82, voltage converter 83, 12-V battery) is supplied to the low-voltage electrical component via the junction box.

### [Auxiliary instruments]

The work vehicle 10 includes auxiliary devices 90 associated with the fuel cell 24. The auxiliary devices 90 are disposed on the front frame 32 of the chassis 41. The auxiliary devices 90 include the first radiator 48, the second radiator 49, a first fan 51, a second fan 52, an air cleaner 91, an ion exchanger 92, and a hydrogen sensor (hydrogen detector) 93. The air cleaner 91, the ion exchanger 92, and the hydrogen sensor 93 are mounted to a lower surface of the battery housing 301 of the battery unit 30.

The first radiator 48 and the second radiator 49 each serve as part of a cooling system configured to cool the fuel cell 24, the motor 31, the inverter 81, the voltage converters 82 and 83, and the like, using a coolant. As illustrated in FIGs. 23 and 24, the first radiator 48 is located forward of the fuel cell 24. The second radiator 49 is located rearward of the fuel cell 24.

The first radiator 48 is mounted to the pair of longitudinal frames 321 of the front frame 32 in a state in which most of the first radiator 48 excluding a lower end portion 48a is located above the pair of longitudinal frames 321. The first radiator 48 is a radiator configured to cool the instruments other than the fuel cell 24. The first radiator 48 is connected to electrical components (heat generating components) to be cooled, such as the motor 31, the inverter 81, and the voltage converters 82 and 83, via a first cooling flow path (not illustrated) provided with a circulation pump. The first radiator 48 cools the coolant supplied thereto via the first cooling flow path, by heat exchange with outside air.

The second radiator 49 is mounted to the pair of longitudinal frames 321 in a state in which the entire second radiator 49 is located above the pair of longitudinal frames 321. The second radiator 49 is a radiator configured to cool the fuel cell 24. The second radiator 49 is connected to the fuel cell 24 via a second cooling flow path (not illustrated) provided with a circulation pump. The second radiator 49 cools the coolant supplied thereto via the second cooling flow path, by heat exchange with outside air. The first radiator 48 may cool the fuel cell 24, and the second radiator 49 may cool the instruments other than the fuel cell 24.

The first fan 51 is located forward of the first radiator 48 and is mounted to the first radiator 48. Most of the first fan 51 excluding a lower end portion 51a is located above the pair of longitudinal frames 321 of the front frame 32. The first fan 51 rotates to supply an airflow to the first radiator 48 and to promote heat exchange with the coolant.

The second fan 52 is located rearward of the second radiator 49 and is mounted to the second radiator 49. The entire second fan 52 is located above the pair of longitudinal frames 321 of the front frame 32. The second fan 52 rotates to supply an airflow to the second radiator 49 and to promote heat exchange with the coolant.

The air cleaner 91 purifies air to be supplied to the fuel cell 24. Although not illustrated, the air cleaner 91 includes an inlet through which outside air is fed into the air cleaner 91, and an outlet through which purified air is discharged from the air cleaner 91. The outlet of the air cleaner 91 is connected to the fuel cell 24 via a pipe (not illustrated) such as a hose.

The ion exchanger 92 is provided on a midway portion of the second cooling flow path connecting the fuel cell 24 and the second radiator 49. The ion exchanger 92 includes a filter and the like. The ion exchanger 92 removes ions from the coolant flowing through the second cooling flow path. The ions are, for example, eluted from the pipe and the like in the second cooling flow path. The work vehicle 10 is capable of ensuring insulation of the coolant flowing through the second cooling flow path, by removing ions from the coolant using the ion exchanger 92. The ion exchanger 92 may remove ions from the coolant in the first cooling flow path.

The hydrogen sensor 93 detects hydrogen leaking from a hydrogen supply flow path through which hydrogen is supplied from the tank 13 to the fuel cell 24. In the present embodiment, the hydrogen supply flow path is the front pipe 22f described above (see also FIG. 16). The hydrogen sensor 93 is disposed, for example, near a connection portion between the front pipe 22f and the fuel cell 24. The work vehicle 10 is capable of detecting hydrogen leaking from the front pipe 22f, using the hydrogen sensor 93.

### [Placement of electrical devices and auxiliary devices]

As illustrated in FIGs. 23 and 24, most of the electrical devices 80 and auxiliary devices 90 are placed between the pair of longitudinal frames 321 of the front frame 32. In the present embodiment, the instruments 30, 81, 82, and 83, of the electrical devices 80, are placed between the pair of longitudinal frames 321, and the instruments 48, 51, 91, 92, and 93, of the auxiliary devices 90, are placed between the pair of longitudinal frames 321. As used herein, the state "placed between the longitudinal frames 321" involves not only a case where one instrument is entirely placed, but also a case where one instrument is partially placed.

Of the foregoing instruments placed between the pair of longitudinal frames 321, the instruments 30, 81, 82, and 83, of the electrical devices 80, and the instruments 91, 92, and 93, of the auxiliary devices 90, are entirely placed in a lower space 35 defined below the fuel cell 24 between the pair of longitudinal frames 321. In the present embodiment, the battery unit 30 is placed in the lower space 35 so as to straddle the axle 123 from above, and is located near the front side of the lower space 35.

The first voltage converter 82 and the second voltage converter 83 are placed in the lower space 35 in proximity to a rear portion of the battery unit 30, and are arranged side-by-side in the vehicle-width direction. The inverter 81 is placed in the lower space 35 in proximity to rear portions of the first voltage converter 82 and second voltage converter 83. The inverter 81, the first voltage converter 82, and the second voltage converter 83 each extend in the vehicle-width direction.

It should be noted that the placement of the instruments 30, 81, 82, and 83, of the electrical devices 80, is not limited to that according to the present embodiment. For example, each of the instruments 30, 81, 82, and 83 may be partially or entirely placed in another space 36 (described later) different from the lower space 35 and located rearward or forward of the lower space 35 between the pair of longitudinal frames 321. It is sufficient that at least one of all the instruments 30, 81, 82, and 83, of the electrical devices 80, is placed between the pair of longitudinal frames 321.

The first radiator 48 and the first fan 51, of the auxiliary devices 90, are placed in another space 36 other than the space between the pair of longitudinal frames 321 below the fuel cell 24. In the present embodiment, the lower end portion 48a, which is a part of the first radiator 48, and the lower end portion 51a, which is a part of the first fan 51, are placed in another space 36 between the fuel cell 24 and the second lateral frame 323. The remaining part of the first radiator 48 above the lower end portion 48a and the remaining part of the first fan 51 above the lower end portion 51a protrude upward beyond the pair of longitudinal frames 321.

The air cleaner 91 is placed in the lower space 35 in proximity to a right rear portion of the inverter 81. The ion exchanger 92 is placed in the lower space 35 in proximity to a left rear portion of the inverter 81. The hydrogen sensor 93 is placed between the air cleaner 91 and the ion exchanger 92 in the lower space 35.

It should be noted that the placement of the instruments 48, 51, 91, 92, and 93, of the auxiliary devices 90, is not limited to that according to the present embodiment. For example, the lower end portion 48a of the first radiator 48 and the lower end portion 51a of the first fan 51 may be placed in another space 36 defined between the second lateral frame 323 and the third lateral frame 324 between the pair of longitudinal frames 321. Alternatively, each of the instruments 91, 92, and 93 may be partially or entirely placed in another space 36 defined rearward or forward of the lower space 35 between the pair of longitudinal frames 321. Alternatively, a lower end portion of the second radiator 49 and a lower end portion of the second fan 52 may be placed between the pair of longitudinal frames 321. Alternatively, it is sufficient that at least one of all the instruments 48, 49, 51, 52, 91, 92, and 93, of the auxiliary devices 90, is placed between the pair of longitudinal frames 321.

### (Functional effects of embodiment)

According to the work vehicle 10 of the present embodiment, the instruments 30, 81, 82, and 83, of the electrical devices 80, and the instruments 48, 51, 91, 92, and 93, of the auxiliary devices 90, are placed between the pair of longitudinal frames 321, above which the fuel cell 24 is disposed, in the chassis 41. Therefore, a space between the pair of longitudinal frames 321 can be effectively utilized as a space where the electrical devices 80 and the auxiliary devices 90 are disposed. As a result, it is possible to suppress upsizing of the work vehicle 10 including the fuel cell 24.

The instruments 30, 81, 82, and 83, of the electrical devices 80, and the instruments 91, 92, and 93, of the auxiliary devices 90, are placed in the lower space 35 between the pair of longitudinal frames 321 below the fuel cell 24. Therefore, the lower space 35 can be effectively utilized as a space where the electrical devices 80 and the auxiliary devices 90 are disposed.

Since the inverter 81 is placed between the pair of longitudinal frames 321 on which the fuel cell 24 is disposed, a wiring length between the fuel cell 24 and the inverter 81 can be reduced. In addition, since the battery unit 30 and the voltage converters 82 and 83 are placed between the pair of longitudinal frames 321, a wiring length between the battery unit 30 and each of the voltage converters 82 and 83 can be reduced.

Since the air cleaner 91 is placed between the pair of longitudinal frames 321 on which the fuel cell 24 is disposed, an air flow path length between the air cleaner 91 and the fuel cell 24 can be reduced. Since the ion exchanger 92 is placed between the pair of longitudinal frames 321 on which the fuel cell 24 is disposed, a coolant flow path length between the ion exchanger 92 and the fuel cell 24 can be reduced.

### [Others]

The embodiments disclosed herein are in all respects illustrative and not restrictive. The scope of the present invention is not limited to the foregoing embodiments, and includes all modifications within the scope of the configurations recited in the claims and their equivalences.

Reference signs used in Chapter 2 are used only in Chapter 2 and are not related to reference signs in other chapters.

The configurations disclosed in Chapter 1 are applicable to the invention disclosed in Chapter 2, and the configurations disclosed in Chapter 2 are applicable to the invention disclosed in Chapter 1.

### [Reference signs list]

- 10: work vehicle
- 11: vehicle body
- 12: traveling device
- 13: tank
- 15: driver's seat
- 16: cabin
- 17: installation frame
- 21: tank unit
- 22: pipe
- 22f: front pipe
- 22r: rear pipe
- 24: fuel cell
- 25: filling unit
- 26: filling port
- 30: battery unit
- 31: motor
- 32: front frame
- 33: transmission case (support body)
- 34: hood
- 34a: upper surface
- 35: lower space
- 36: another space
- 41: chassis
- 43: coupling device
- 47: fender
- 48: first radiator
- 48a: lower end portion
- 49: second radiator
- 51: first fan
- 51a: lower end portion
- 52: second fan
- 80: electrical device
- 81: inverter
- 82: first voltage converter
- 83: second voltage converter
- 90: auxiliary device
- 91: air cleaner
- 92: ion exchanger
- 93: hydrogen sensor (hydrogen detector)
- 111: cover
- 111a: upper surface
- 121: front wheel
- 122: rear wheel
- 123: axle
- 151: steering wheel
- 162: front pillar
- 163: rear pillar
- 164: roof
- 165: windshield
- 166: side window
- 167: step
- 171: upper frame portion
- 172: front frame portion
- 173: rear frame portion
- 175: reinforcement frame portion
- 211: tank case
- 212: valve unit
- 213: openable/closable door
- 241: cell casing
- 242: fuel cell stack
- 300: battery
- 301: battery housing
- 321: longitudinal frame
- 322: first lateral frame
- 323: second lateral frame
- 324: third lateral frame
- 334: PTO shaft (transmission shaft)
- 340: working device

### <Chapter 3>

### <Problems to be solved by the present disclosure>

A tractor includes a heat exchanger (radiator), and the heat exchanger cools, by heat exchange with outside air, a heat transfer medium passing through a fuel cell and an electrical component such as a battery. Increasing the capacity of the heat exchanger enhances the performance of the heat exchanger. However, there is a limit to upsizing of the heat exchanger due to a relationship with an installation space.

Hence, an object of the present disclosure is to improve heat exchange efficiency in a work machine including a heat exchanger.

### <Advantageous effect of the present disclosure>

According to a work machine of the present disclosure, it is possible to improve heat exchange efficiency of a heat exchanger.

### <Outline of embodiments of the present disclosure>

An outline of below-listed embodiments of the present disclosure is described.
(1) A work machine according to an embodiment of the present disclosure includes: a machine frame; a fuel cell installed on the machine frame; an electrical component installed on the machine frame; and an auxiliary heat exchanger configured to perform heat exchange between a first heat transfer medium for adjusting a temperature of the fuel cell and a second heat transfer medium for adjusting a temperature of the electrical component.

According to the work machine having this configuration, for example, when a temperature of the first heat transfer medium for adjusting the temperature of the fuel cell is higher than a temperature of the second heat transfer medium for adjusting the temperature of the electrical component, the temperature of the first heat transfer medium is reduced by the second heat transfer medium in the auxiliary heat exchanger. The fuel cell is cooled using the first heat transfer medium whose temperature has been reduced by the second heat transfer medium. This configuration improves heat exchange efficiency of the work machine as a whole.

(2) The work machine described in (1) includes: a first flow path through which the first heat transfer medium passes to adjust the temperature of the fuel cell; and a second flow path through which the second heat transfer medium passes to adjust the temperature of the electrical component, and the auxiliary heat exchanger is connected to the first flow path and the second flow path.

According to this configuration, the auxiliary heat exchanger performs heat exchange between the first heat transfer medium and the second heat transfer medium.

(3) The work machine described in (2) includes: a first heat exchanger disposed in the first flow path and configured to adjust a temperature of the first heat transfer medium that has passed through the fuel cell; and a second heat exchanger disposed in the second flow path and configured to adjust a temperature of the second heat transfer medium that has passed through the electrical component.

According to this configuration, the first heat exchanger can reduce the temperature of the first heat transfer medium that has passed through the fuel cell. The second heat exchanger can reduce the temperature of the second heat transfer medium that has passed through the electrical component.

(4) In the work machine described in (3), the temperature of the first heat transfer medium that has passed through the first heat exchanger is higher than the temperature of the second heat transfer medium that has passed through the second heat exchanger.

According to this configuration, the auxiliary heat exchanger performs heat exchange between the first heat transfer medium having a high temperature and the second heat transfer medium having a low temperature. The fuel cell is cooled using the first heat transfer medium whose temperature has been reduced by the second heat transfer medium.

(5) In the work machine described in (4), the first heat exchanger and the second heat exchanger have a difference in capability regarding an amount of temperature decrease by heat exchange.

For example, in a case where the amount of temperature decrease of the first heat transfer medium in the first heat exchanger is smaller than the amount of temperature decrease of the second heat transfer medium in the second heat exchanger, the second heat exchanger may have relatively enough capability. In this case, the fuel cell is cooled with the first heat transfer medium while being supplemented by the second heat transfer medium.

(6) The work machine described in any one of (1) to (5) includes a bypass flow path connected in parallel with a flow path where the second heat transfer medium passes through the auxiliary heat exchanger such that the second heat transfer medium flows through the bypass flow path.

According to this configuration, a part of the second heat transfer medium passes through the auxiliary heat exchanger and exchanges heat with the first heat transfer medium. Another part of the second heat transfer medium passes through the bypass flow path without passing through the auxiliary heat exchanger. That is, this configuration is effective in a case where there is no necessity to perform heat exchange between the entire second heat transfer medium and the first heat transfer medium in the auxiliary heat exchanger.

(7) The work machine described in (6) includes a bypass valve configured to adjust a ratio of the second heat transfer medium flowing through the bypass flow path.

According to this configuration, an amount of the second heat transfer medium used for heat exchange in the auxiliary heat exchanger is adjusted.

(8) In the work machine described in any one of (1) to (3), the electrical component includes a battery configured to store electric power generated by the fuel cell and a motor configured to generate traveling motive power.

At a start of operation of the work machine, a warm-up operation is preferably performed for rolling bearings of the electrical components such as the battery and the motor. In performing the warm-up operation for the battery and the motor, the auxiliary heat exchanger uses waste heat of the first heat exchanger (first heat transfer medium), which can reduce time required for the warm-up operation for these electrical components.

(9) The work machine described in (3) includes an air conditioner including a compressor, an expansion valve, an evaporator, and a condenser and having a cooling function using a third heat transfer medium, and the evaporator performs heat exchange between the first or second heat transfer medium and the third heat transfer medium.

According to this configuration, the fuel cell or the electrical component is cooled using the first heat transfer medium or the second heat transfer medium whose temperature has been reduced by the third heat transfer medium.

(10) The work machine described in (9) includes a battery and a heating unit configured to increase a temperature of the battery using a fourth heat transfer medium, and the condenser performs heat exchange between the fourth heat transfer medium and the third heat transfer medium.

If the temperature of the battery is low, the capability of the battery decreases. According to this configuration, the temperature of the fourth heat transfer medium can be increased by waste heat of the air conditioner (third heat transfer medium), and the fourth heat transfer medium can be used to efficiently increase the temperature of the battery.

(11) The work machine described in (9) or (10) includes a first valve configured to adjust a flow rate of the first heat transfer medium or the second heat transfer medium passing through the evaporator.

According to this configuration, an auxiliary level by the third heat transfer medium for the air conditioner can be adjusted by, for example, feedback-controlling an opening degree of the first valve.

(12) The work machine described in (10) includes a second valve configured to adjust a flow rate of the fourth heat transfer medium passing through the battery.

According to this configuration, an auxiliary level of an increase in battery temperature by the third heat transfer medium for the air conditioner can be adjusted by, for example, feedback-controlling an opening degree of the second valve.

(13) In the work machine described in (10), the heating unit includes an electric heater configured to heat the fourth heat transfer medium.

According to this configuration, the temperature of the battery can be increased quickly.

(14) A work machine according to an embodiment of the present disclosure includes: a machine frame; a fuel cell installed on the machine frame; an electrical component installed on the machine frame; a heat exchanger configured to adjust, using a heat transfer medium, a temperature of the fuel cell and/or a temperature of the electrical component; and an air conditioner including a compressor, an expansion valve, an evaporator, and a condenser and having a cooling function using a third heat transfer medium, and the evaporator performs heat exchange between the heat transfer medium and the third heat transfer medium.

According to the work machine having this configuration, for example, when a temperature of the heat transfer medium for adjusting a temperature of the fuel cell and/or a temperature of the electrical component is higher than a temperature of the third heat transfer medium for the air conditioner, the temperature of the heat transfer medium is reduced by the third heat transfer medium in the auxiliary heat exchanger. One or each of the fuel cell and the electrical component is cooled using the heat transfer medium whose temperature has been reduced by the third heat transfer medium.

(15) The work machine described in (14) includes a battery and a heating unit configured to increase a temperature of the battery using a fourth heat transfer medium, and the condenser performs heat exchange between the fourth heat transfer medium and the third heat transfer medium.

If the temperature of the battery is low, the capability of the battery decreases. According to this configuration, the temperature of the fourth heat transfer medium can be increased by waste heat of the air conditioner (third heat transfer medium), and the fourth heat transfer medium can be used to efficiently increase the temperature of the battery. That is, the temperature of the battery can be increased using the fourth heat transfer medium whose temperature has been increased by the third heat transfer medium.

### <Details of embodiments of the present disclosure>

Details of embodiments of the present disclosure are described below with reference to the drawings. It should be noted that at least some of the embodiments described below may be arbitrarily combined with each other.

### [Overall structure of work machine]

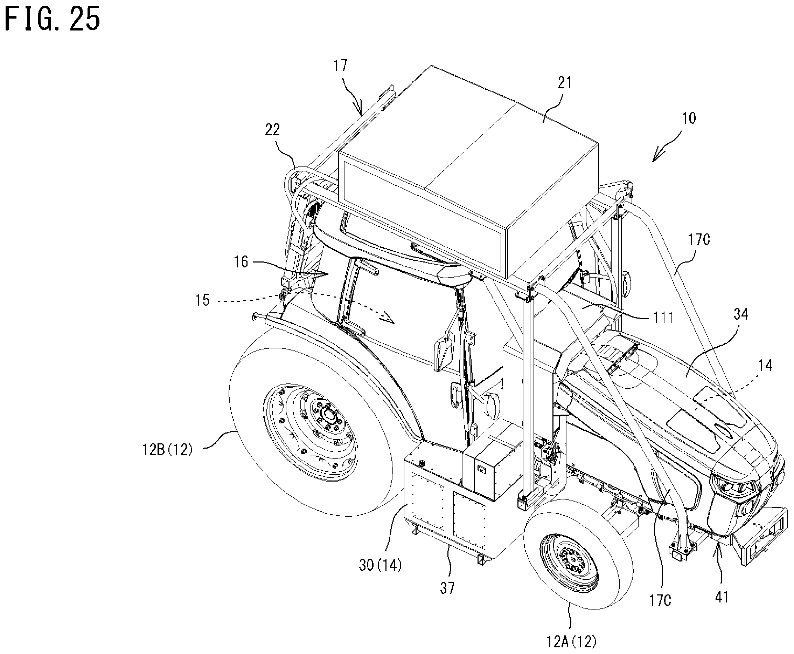

FIG. 25 is a perspective view illustrating an example of an overall structure of a work machine.

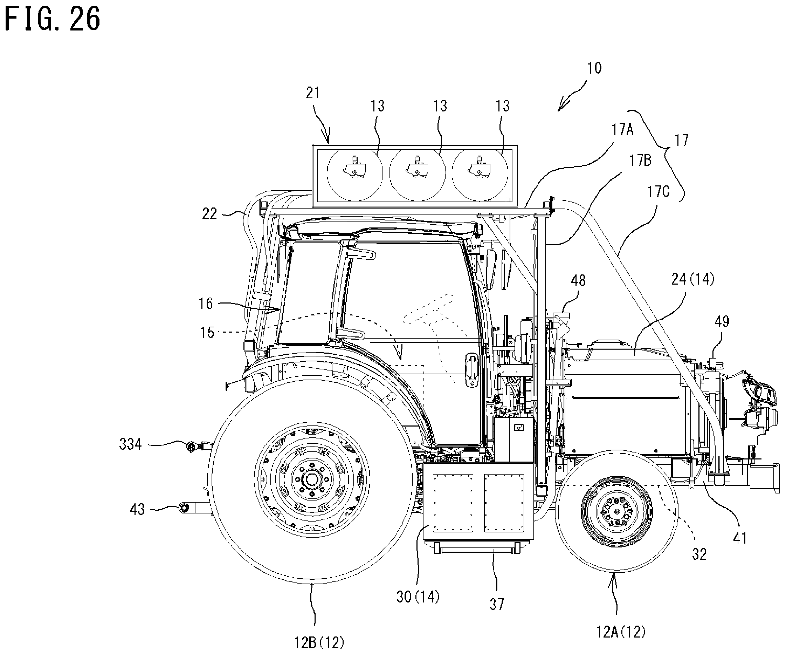

The work machine of the present embodiment is a work vehicle for use in farmwork, and is specifically a tractor. The work machine is not limited to a tractor, and may be a movable body such as a construction machine or a utility vehicle. In the following, a description is given of a case where the work machine is a work vehicle 10. FIG. 26 is a right side view of the work vehicle 10 from which some exterior components (such as a hood 34 and a cover 111) are removed.

The work vehicle 10 includes a chassis 41, a drive device 14, a driver's seat 15, a cabin 16, the hood 34, the cover 111, a tank unit 21, a first radiator 48, a second radiator 49, and a traveling device 12.

The hood 34 and the cover 111 are installed on the chassis 41, and the cabin 16 is disposed rearward of the cover 111. The hood 34, the cover 111, and the cabin 16 are arranged in this order from the front side to the rear side of the work vehicle 10.

The cabin 16 is a driver's cab partitioned by front pillars, rear pillars, and a roof. The work vehicle 10 may include, in place of the cabin 16, a canopy or a ROPS. If the work vehicle 10 does not include the cabin 16, the tank unit 21 is disposed above the driver's seat 15 by an installation frame 17.

As illustrated in FIG. 26, the second radiator 49, a fuel cell 24, and the first radiator 48 are installed on a front portion of the chassis 41 with the second radiator 49, the fuel cell 24, and the first radiator 48 arranged in this order from the front side to the rear side. The second radiator 49 and the fuel cell 24 are covered with the hood 43, and the first radiator 48 is covered with the cover 111.

The tank unit 21 includes a tank 13 configured to store fuel. The fuel is in a liquid or gaseous state, and examples of the fuel include hydrogen, methane, carbon monoxide (CO), and the like. In this embodiment, the tank 13 stores hydrogen gas. The drive device 14 is driven using the stored fuel.

The work vehicle 10 is an FCV, and travels using, as an energy source, electric power generated by the fuel cell 24 through a chemical reaction between hydrogen and oxygen. The fuel cell 24 may generate electric power using methane or carbon monoxide (CO).

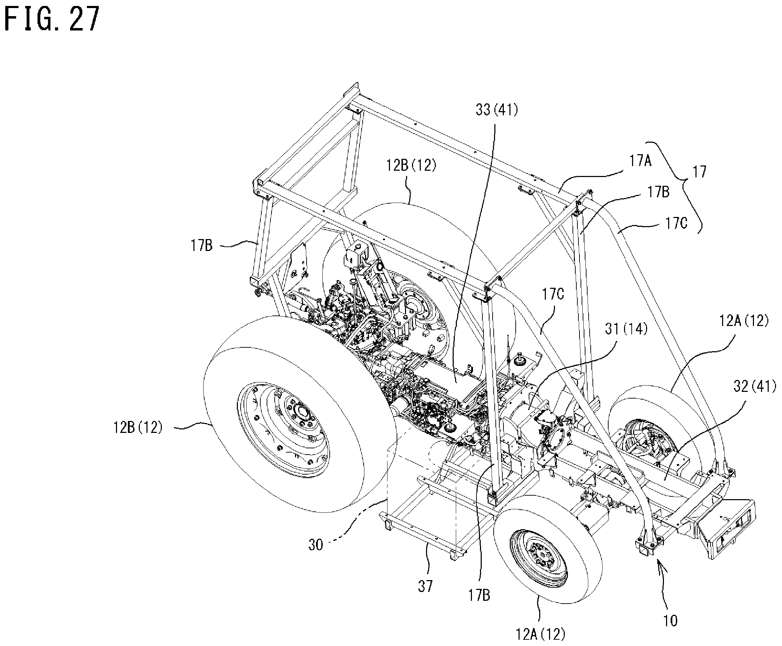

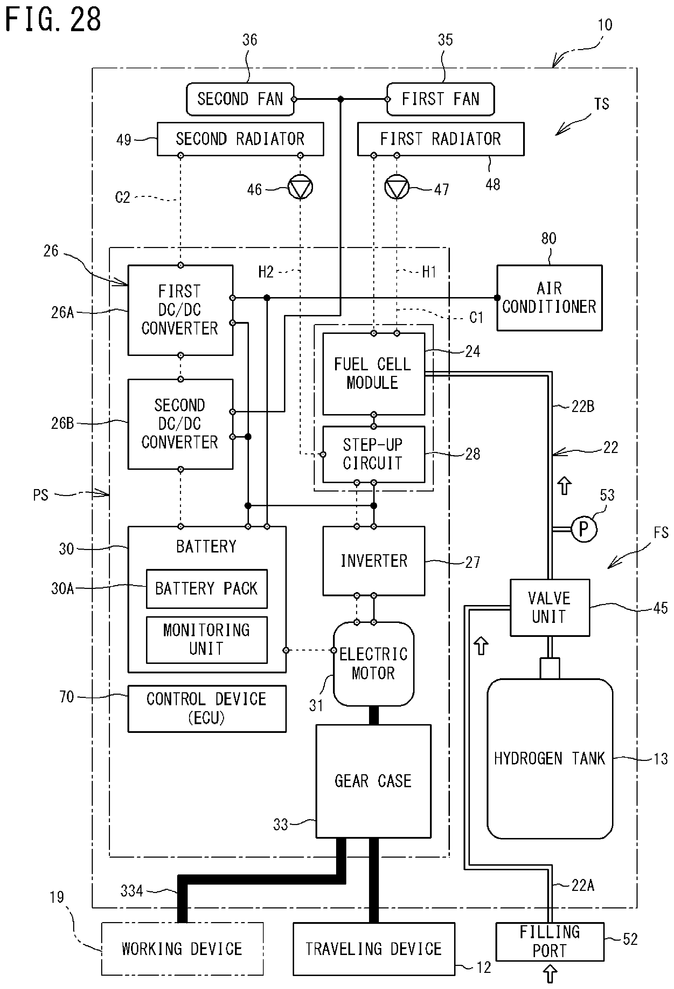

The drive device 14 includes the fuel cell 24, a battery 30, and an electric motor 31 (see FIG. 27). FIG. 27 is a perspective view illustrating an example of an internal structure of the work vehicle 10. The battery 30 includes a battery pack 30A (see FIG. 28) configured to store output electric power from the fuel cell 24. FIG. 28 is a block diagram illustrating an example of a functional configuration of the work vehicle 10.

The work vehicle 10 includes a pipe 22 for hydrogen gas. The tank 13 is filled with hydrogen gas supplied thereto through a filling port 52 (see FIG. 28) connected to an end of the pipe 22. The hydrogen gas in the tank 13 is supplied to the fuel cell 24 through the pipe 22.

The traveling device 12 is installed on the chassis 41, and includes front wheels 12A and rear wheels 12B. The front wheels 12A and/or the rear wheels 12B are rotated by motive power from the motor 31. The front wheels 12A and/or the rear wheels 12B to be rotated by the motive power from the motor 31, i.e., the driving wheels may be crawlers (caterpillars).

### [Internal structure of work vehicle]

The chassis 41 (see FIG. 27) has a steel frame elongated in the front-rear direction, and includes a front frame 32 and a gear case 33. The gear case 33 is coupled to a rear portion of the front frame 32. The gear case 33 and the front frame 32 form a framework of the work vehicle 10. The chassis 41 including the front frame 32 and the gear case 33 serves as a vehicle body frame (machine frame) on which the drive device 14, the driver's seat 15, the cabin 16, and the like are installed.

The installation frame 17 for the tank unit 21 is coupled to the chassis 41. The installation frame 17 supports the tank unit 21 at a position above the cabin 16. The installation frame 17 includes: a ceiling frame 17A having an approximately rectangular shape whose longer sides extend in the front-rear direction and shorter sides extend in the left-right direction; a plurality of pillars 17B supporting the ceiling frame 17A from below; and a pair of left and right reinforcement frames 17C coupled to a front end portion of the ceiling frame 17A. The tank unit 21 is coupled to the ceiling frame 17A. The reinforcement frames 17C are reinforcing diagonal members extending from a front end portion of the ceiling frame 17A to the front frame 32 so as to tilt downward.

The battery 30 is supported by a support frame 37 coupled to the chassis 41. Specifically, the motor 31 is installed on the front frame 32 of the chassis 41, and the support frame 37 is mounted to a portion of the front frame 32 corresponding to the motor 31. The support frame 37 has, for example, a metal frame member, and is mounted to the front frame 32 in a cantilevered manner so as to protrude rightward from the front frame 32.

The gear case 33 is located rearward of the motor 31, and includes a power transmission mechanism. The power transmission mechanism includes a transmission, a clutch, and a differential gear, and reduces or increases rotation of an output shaft of the motor 31 to transmit the reduced or increased rotation to the traveling device 12.

The power transmission mechanism in the gear case 33 includes a branch mechanism configured to output part of the motive power from the motor 31 to a PTO shaft 334 (see FIG. 26). The PTO shaft 334 is an output shaft protruding from a rear portion of the gear case 33.

The work vehicle 10 includes a coupling device 43 (see FIG. 26) for coupling, to a rear end of the work vehicle 10, a working device 19 (see FIG. 28) for performing desired farmwork. The working device 19 is also referred to as an implement. The working device 19 is, for example, a cultivator, a baler, or the like.

Rotational motion of the PTO shaft 334 is transmitted to an input shaft of the working device 19 while, for example, the work vehicle 10 is traveling. The work vehicle 10 is capable of driving the working device 19 using the motive power from the motor 31 while traveling in an agricultural field or the like.

### [Functional configuration of work vehicle]

As illustrated in FIG. 28, the work vehicle 10 includes functional systems such as a fuel system FS, a power system PS, and a temperature control system TS.

The fuel system FS includes, as the constituent elements, the tank 13 and a valve unit 45. The temperature control system TS includes, as the constituent elements, the first radiator 48, the second radiator 49, and an air conditioner 80. The power system PS includes, as the constituent elements, the fuel cell 24, a step-up circuit 28, a DC/DC converter 26, an inverter 27, the battery 30, the motor 31, and the gear case 33.

Hereinafter, the DC/DC converter 26 is also referred to as a "converter 26". In the present embodiment, the converter 26 includes a first DC/DC converter 26A (also referred to as a "first converter 26A") and a second DC/DC converter 26B (also referred to as a "second converter 26B").

The tank 13 is coupled to a first pipe 22A and a second pipe 22B via the valve unit 45. The first pipe 22A is a gas pipe connecting the filling port 52 and the valve unit 45 to guide hydrogen gas from the filling port 52 toward the tank 13. The second pipe 22B is a gas pipe connecting the fuel cell 24 and the valve unit 45 to guide hydrogen gas in the tank 13 to the fuel cell 24.

The valve unit 45 is an assembly of valves such as an on-off valve and a reducing valve. The valve unit 45 adjusts a flow rate of hydrogen gas in the tank 13 and delivers the hydrogen gas to the fuel cell 24 in such a manner that action of each valve in the valve unit 45 is controlled.

The motor 31 includes a rotor and a stator having a plurality of coils, and drives an output shaft at a predetermined torque and a predetermined rotational speed. In the present embodiment, the work vehicle 10 includes only one motor 31, and a rotation shaft of the motor 31 is coupled to the gear case 33.

The power transmission mechanism of the gear case 33 outputs part of the motive power from the motor 31 to the traveling device 12, and outputs the remaining motive power from the motor 31 to the PTO shaft 334.

The fuel cell 24 is, for example, a battery module including a casing and a plurality of unit cells each having a positive electrode and a negative electrode and arranged and stacked in layers in the casing. The fuel cell 24 collects electric power generated by the respective unit cells to generate electric power required to drive the electric motor 31. The fuel cell 24 is electrically connected to the step-up circuit 28, and the step-up circuit 28 is electrically connected to the inverter 27.

The step-up circuit 28 steps up a voltage of electric power received from the fuel cell 24, and outputs the resultant electric power to the inverter 27.

The inverter 27 is electrically connected to the motor 31. The inverter 27 converts the DC electric power received from the step-up circuit 23 into three-phase AC electric power, and outputs the three-phase AC electric power to the motor 31. Electric power generated by the fuel cell 24 is stepped up and converted into AC electric power, and the AC electric power is then transmitted to the motor 31.

The work vehicle 10 includes low-voltage electrical components operable at a voltage lower than a voltage at which the motor 31 operates. These electrical components receive DC electric power stepped down by a step-down circuit.

The low-voltage electrical components include, for example, the battery 30, the first fan 35 of the first radiator 48, the second fan 36 of the second radiator 49, and the air conditioner 80. The step-down circuit is the converter 26. In the present embodiment, the first converter 26A and the second converter 26B each correspond to the step-down circuit.

The first converter 26A steps down a DC voltage received from the step-up circuit 28, and supplies the stepped-down voltage to the battery 30 and the air conditioner 80. The second converter 26B steps down a DC voltage received from the step-up circuit 28, and supplies the stepped-down voltage to the first fan 35 of the first radiator 48 and the second fan 36 of the second radiator 49.

The inverter 27 and the converter 26 (first converter 26A, second converter 26B) are mounted to the chassis 41 corresponding to a vehicle body frame. The inverter 27 and the converter 26 are installed near the driver's seat 15.

The battery 30 is a power storage device configured to temporarily store electric power to be supplied to the motor 31. The battery 30 includes a battery pack 30A. The battery pack 30A includes at least one battery. The battery is, for example, a rechargeable battery such as a lithium-ion battery or a lead-acid battery.

### [Temperature control system TS]

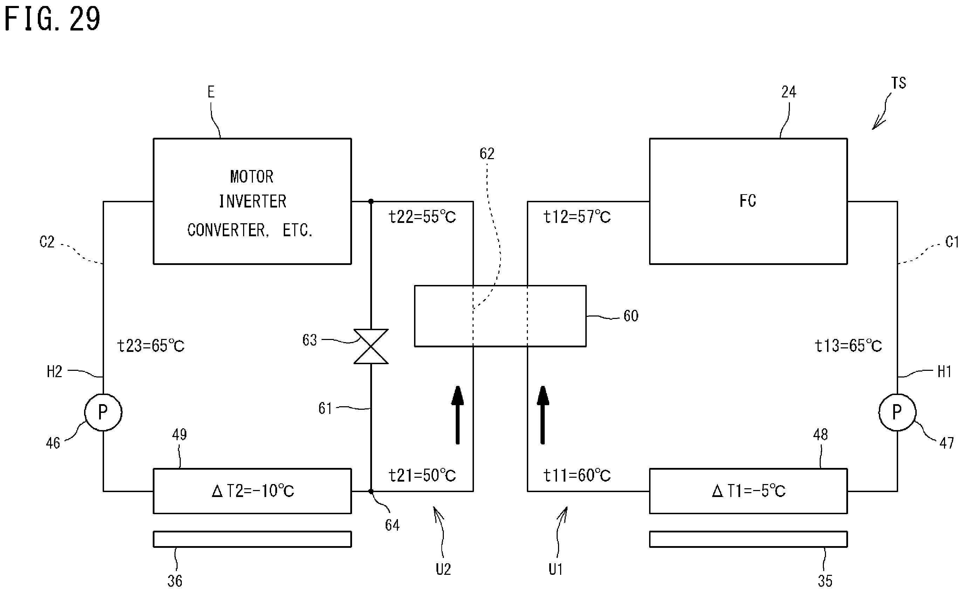

FIG. 29 is an explanatory diagram illustrating an example of the temperature control system TS. The temperature control system TS is described with reference to FIGs. 28 and 29. The temperature control system TS includes the first radiator 48, the second radiator 49, and the air conditioner 80.

The first radiator 48 is a first heat exchanger of a first cooling unit U1 configured to cool the fuel cell 24 with a first heat transfer medium (first coolant) C1.

The second radiator 49 is a second heat exchanger of a second cooling unit U2 configured to cool electrical components E including the motor 31 and the like, with a second heat transfer medium (second coolant) C2.

A first flow path (first pipe) H1 is connected to the first radiator 48. The first flow path H1 is a circulation flow path, and the first heat transfer medium C1 circulates through the first flow path H1 by a pump 47. The first flow path H1 passes through the first radiator 48. The first radiator 48 cools the first heat transfer medium C1 by heat exchange with outside air. The first radiator 48 includes the first fan 35 for promoting the heat exchange. The first cooling unit U1 including the first radiator 48 and the flow path H1 cools the fuel cell 24.

A second flow path (second pipe) H2 is connected to the second radiator 49. The second flow path H2 is a circulation flow path, and the second heat transfer medium C2 circulates through the second flow path H2 by a pump 46. The second flow path H2 passes through the second radiator 49. The second radiator 49 cools the second heat transfer medium C2 by heat exchange with outside air. The second radiator 49 includes the second fan 36 for promoting the heat exchange. The second cooling unit U2 including the second radiator 49 and the flow path H2 cools the electrical components E (heat-generating components) such as the first converter 26A, the second converter 26B, the battery 30, the motor 31, the inverter 27, and the step-up circuit 28.

As described above, the temperature control system TS includes the first flow path H1 through which the first heat transfer medium C1 passes to adjust the temperature of the fuel cell 24, and the second flow path H2 through which the second heat transfer medium C2 passes to adjust the temperature of each electrical component E. The first radiator 48 is disposed in the first flow path H1, and adjusts the temperature of the first heat transfer medium C1 passing through the fuel cell 24 (i.e., cools the first heat transfer medium C1 passing through the fuel cell 24). The second radiator 49 is disposed in the second flow path H2, and adjusts the temperature of the second heat transfer medium C2 passing through each electrical component E (i.e., cools the second heat transfer medium C2 passing through each electrical component E).

The temperature control system TS further includes an auxiliary radiator as an auxiliary heat exchanger 60. The auxiliary heat exchanger 60 is connected to the first flow path H1 and the second flow path H2. In other words, the first flow path H1 and the second flow path H2 pass through the auxiliary heat exchanger 60. The auxiliary heat exchanger 60 performs heat exchange between the first heat transfer medium C1 in the first flow path H1 and the second heat transfer medium C2 in the second flow path H2.

In the present embodiment, a flow rate of the first heat transfer medium C1 flowing through the first flow path H1 is larger than a flow rate of the second heat transfer medium C2 flowing through the second flow path H2.

The first radiator 48 and the second radiator 49 have a difference in capability regarding an amount of temperature decrease by heat exchange. In the present embodiment, as illustrated in FIG. 29, an amount of temperature decrease ΔT1 of the first heat transfer medium C1 in the first radiator 48 is smaller than an amount of temperature decrease ΔT2 of the second heat transfer medium C2 in the second radiator 49.

A temperature t11 of the first heat transfer medium C1 that has passed through the first radiator 48 is higher than a temperature t21 of the second heat transfer medium C2 that has passed through the second radiator 49. The auxiliary heat exchanger 60 performs heat exchange between the first heat transfer medium C1 having a high temperature and the second heat transfer medium C2 having a low temperature. In FIG. 29, a temperature t13 of the first heat transfer medium C1 after passing through the fuel cell 24 and before passing through the first radiator 48 and a temperature t23 of the second heat transfer medium C2 after passing through all the electrical components E and before passing through the second radiator 49 are illustrated as being the same.

By the heat exchange between the first heat transfer medium C1 and the second heat transfer medium C2 in the auxiliary heat exchanger 60, a temperature t22 of the second heat transfer medium C2 after passing through the auxiliary heat exchanger 60 becomes higher than the temperature t21 of the second heat transfer medium C2 before passing through the auxiliary heat exchanger 60. In contrast, a temperature t12 of the first heat transfer medium C1 after passing through the auxiliary heat exchanger 60 becomes lower than the temperature t11 of the first heat transfer medium C1 before passing through the auxiliary heat exchanger 60.

The first heat transfer medium C1 whose temperature has been further reduced by the auxiliary heat exchanger 60 passes through the fuel cell 24. The fuel cell 24 is cooled using the first heat transfer medium C1 whose temperature has been reduced by the second heat transfer medium C2. In other words, the fuel cell 24 is cooled while being supplemented by the second heat transfer medium C2.

The second flow path H2 includes a flow path 62 where the second heat transfer medium C2 passes through the auxiliary heat exchanger 60. The second flow path H2 also includes a bypass flow path 61. In other words, the temperature control system TS includes the bypass flow path 61 connected in parallel with the flow path 62 such that the second heat transfer medium C2 flows through the bypass flow path 61.

A part of the second heat transfer medium C2 in the second flow path H2 passes through the auxiliary heat exchanger 60 (flow path 62) and exchanges heat with the first heat transfer medium C1. Another part of the second heat transfer medium C2 can pass and circulate through the bypass flow path 61 without passing through the auxiliary heat exchanger 60 (flow path 62).

The temperature control system TS includes a bypass valve 63. In the form illustrated in FIG. 29, the bypass valve 63 is disposed in a midway portion of the bypass flow path 61. The bypass valve 63 has an opening degree adjusted and controlled by a control device 70 (see FIG. 28) of the work vehicle 10. The bypass valve 63 may be disposed at a branch portion 64 between the second flow path H2 and the bypass flow path 61. In this case, the bypass valve 63 is a three-way valve.

The bypass flow path 61 is effective in a case where there is no necessity to perform heat exchange between the entire second heat transfer medium C2 and the first heat transfer medium C1 in the auxiliary heat exchanger 60. In addition, the bypass valve 63 adjusts an amount (flow rate) of the second heat transfer medium C2 used for the heat exchange in the auxiliary heat exchanger 60. The bypass valve 63 is capable of opening its valve element at a full opening degree, an opening degree of zero, or an intermediate opening degree. Adjusting the opening degree of the bypass valve 63 enables adjustment of a flow rate of the second heat transfer medium C2 flowing through the bypass flow path 61.

As will be described later, at a start of operation of the work vehicle 10, a warm-up operation is preferably performed for rolling bearings (not illustrated) of the electrical components E such as the battery 30 and the motor 31.

For the warm-up operation, the opening degree of the bypass valve 63 is reduced so as to cause a relatively large amount of the second heat transfer medium C2 to flow through the auxiliary heat exchanger 60 (flow path 62). After the warm-up operation becomes unnecessary or if auxiliary for the first radiator 48 is unnecessary, the opening degree of the bypass valve 63 is increased so as to cause a relatively large amount of the second heat transfer medium C2 to flow through the bypass flow path 61.

As described above, the bypass flow path 61 causes the second heat transfer medium C2 to be distributed between the flow path 62 passing through the auxiliary heat exchanger 60 and the bypass flow path 61. Adjusting the opening degree of the bypass valve 63 enables adjustment of a ratio of the second heat transfer medium C2 flowing through the bypass flow path 61. The bypass valve 63 is capable of making an amount of the second heat transfer medium C2 flowing through the bypass flow path 61 zero. In the case where the bypass valve 63 is disposed at the branch portion 64, the bypass valve 63 is capable of making an amount of the second heat transfer medium C2 flowing through the auxiliary heat exchanger 60 (flow path 62) zero.

Although not illustrated, a valve may be provided in a flow path from the branch portion 64 to the auxiliary heat exchanger 60. Adjusting an opening degree of the valve enables adjustment of a flow rate of the second heat transfer medium C2 flowing through the auxiliary heat exchanger 60 (flow path 62), which can make the flow rate zero.

### [Modification of temperature control system TS]

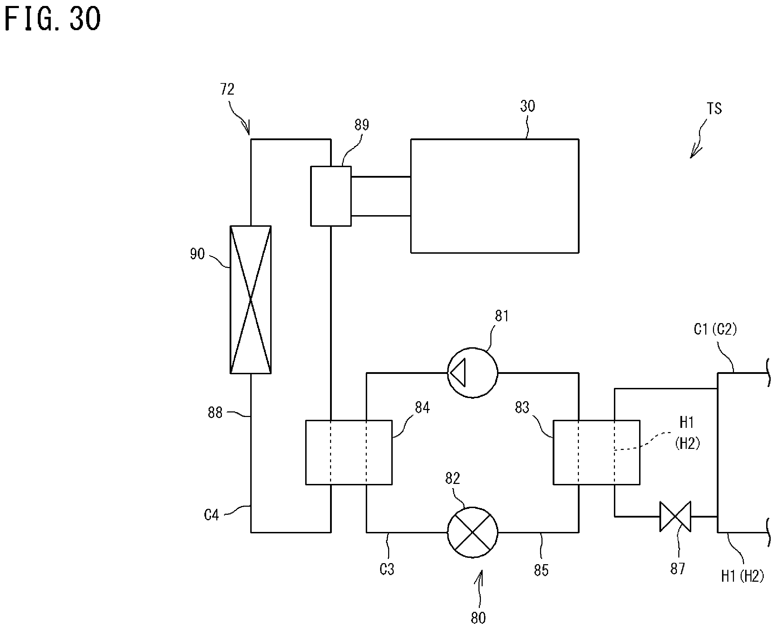

FIG. 30 is an explanatory diagram illustrating a modification of the temperature control system TS. The temperature control system TS illustrated in FIG. 30 includes, in addition to the configuration of the temperature control system TS illustrated in FIG. 29, the air conditioner 80 and a heating unit 72. The heating unit 72 is a device configured to increase a temperature of the battery 30 using a fourth heat transfer medium C4. It should be noted that FIG. 30 does not illustrate the configuration of the temperature control system TS illustrated in FIG. 29.

The air conditioner 80 includes a compressor 81, an expansion valve 82, an evaporator 83, and a condenser 84, and has a cooling function using a third heat transfer medium C3. The air conditioner 80 adjusts a temperature in the cabin 16 (e.g., cools the interior of the cabin 16) or cools the devices (e.g., the heat-generating components such as the control device 70) of the work vehicle 10, for example.

The air conditioner 80 includes a circulation pipe 85 through which the third heat transfer medium C3 passes. The compressor 81, the expansion valve 82, the evaporator 83, and the condenser 84 are disposed in respective portions of the circulation pipe 85. The third heat transfer medium C3 in the evaporator 83 has a temperature lower than a temperature of the first heat transfer medium C1 and/or a temperature of the second heat transfer medium C2.

The evaporator 83 performs heat exchange between the third heat transfer medium C3 and one of the first heat transfer medium C1 and the second heat transfer medium C2. Specifically, the first flow path H1, through which the first heat transfer medium C1 flows, passes through the evaporator 83, and the evaporator 83 performs heat exchange between the first heat transfer medium C1 and the third heat transfer medium C3. Alternatively, the second flow path H2, through which the second heat transfer medium C2 flows, passes through the evaporator 83, and the evaporator 83 performs heat exchange between the second heat transfer medium C2 and the third heat transfer medium C3. Alternatively, both the first flow path H1 and the second flow path H2 may pass through the evaporator 83 such that the evaporator 83 performs heat exchange between the first heat transfer medium C1 and the third heat transfer medium C3 and heat exchange between the second heat transfer medium C2 and the third heat transfer medium C3.

In the evaporator 83, the temperature of the first heat transfer medium C1 or the second heat transfer medium C2 is reduced with the third heat transfer medium C3. The fuel cell 24 is cooled with the first heat transfer medium C1 whose temperature has been reduced, and the electrical components E are cooled with the second heat transfer medium C2 whose temperature has been reduced. That is, according to the temperature control system TS illustrated in FIG. 30, the fuel cell 24 or the electrical components E are cooled while being supplemented by the third heat transfer medium C3.

The temperature control system TS illustrated in FIG. 30 includes a valve (first valve) 87 disposed in the first flow path H1 or the second flow path H2. The valve 87 has a valve element whose opening degree is arbitrarily changeable, and adjusts a flow rate of the first heat transfer medium C1 or the second heat transfer medium C2 passing through the evaporator 83. The opening degree of the valve 87 is controlled by the control device 70.

The opening degree of the valve 87 is feedback-controlled based on, for example, a temperature of the first heat transfer medium C1 or a temperature of the second heat transfer medium C2. This configuration enables adjustment of an auxiliary level of the third heat transfer medium C3 for the first radiator 48 or the second radiator 49.

As described above, the temperature control system TS illustrated in FIG. 30 includes the heating unit 72 configured to increase the temperature of the battery 30 using the fourth heat transfer medium C4. The heating unit 72 includes a circulation flow path 88 for circulating the fourth heat transfer medium C4 and a valve (second valve) 89. The heating unit 72 includes an electric heater 90 configured to heat the fourth heat transfer medium C4. The electric heater 90 is capable of increasing the temperature of the battery 30 quickly.

The temperature of the fourth heat transfer medium C4 in the condenser 84 is occasionally lower than the temperature of the third heat transfer medium C3. In this case, the condenser 84 performs heat exchange between the fourth heat transfer medium C4 and the third heat transfer medium C3.

If the temperature of the battery 30 is low, the capability of the battery 30 decreases. When the condenser 84 performs the heat exchange between the fourth heat transfer medium C4 and the third heat transfer medium C3, the temperature of the fourth heat transfer medium C4 can be increased using waste heat of the air conditioner 80 (third heat transfer medium C3). The fourth heat transfer medium C4 can be used to efficiently increase the temperature of the battery 30.

The valve 89 is disposed in the midway portion of the circulation flow path 88. The valve 89 adjusts the flow rate of the fourth heat transfer medium C4 passing through the battery 30. The opening degree of the valve 89 is controlled by the control device 70. The opening degree of the valve 89 is feedback-controlled based on, for example, the temperature of the battery 30. This configuration enables adjustment of an auxiliary level by the third heat transfer medium C3 for the heating unit 72.

### [Work vehicle 10 of the present embodiment]

As described above, the work vehicle 10 of the present embodiment (see FIG. 29) includes the fuel cell 24, the electrical components E such as the motor 31, and the auxiliary heat exchanger 60. The auxiliary heat exchanger 60 performs heat exchange between the first heat transfer medium C1 for adjusting the temperature of the fuel cell 24 (e.g., cooling the fuel cell 24) and the second heat transfer medium C2 for adjusting the temperature of each electrical component E (e.g., cooling each electrical component E).

In the present embodiment, the temperature t11 of the first heat transfer medium C1 that has passed through the first radiator 48 after cooling the fuel cell 24 becomes higher than the temperature t21 of the second heat transfer medium C2 that has passed through the second radiator 49 after cooling each electrical component E (t11 > t21).

The auxiliary heat exchanger 60 performs heat exchange between the first heat transfer medium C1 and the second heat transfer medium C2. In other words, the first heat transfer medium C1 having a high temperature is cooled by the second heat transfer medium C2 having a low temperature. The fuel cell 24 is cooled by the first heat transfer medium C1 cooled in this manner. In other words, the fuel cell 24 is cooled while being supplemented by the second heat transfer medium C2. As a result, this configuration improves heat exchange efficiency of the work vehicle 10 as a whole. In particular, the size of the first radiator 48 may be reduced.

In the work vehicle 10 of the present embodiment, the electrical components E include the battery 30 configured to store electric power generated by the fuel cell 24, and the motor 31 configured to generate traveling motive power. At the start of operation of the work vehicle 10, the warm-up operation is preferably performed for the rolling bearings (not illustrated) of the electrical components E such as the battery 30 and the motor 31. In performing the warm-up operation for the battery 30 and the motor 31, the auxiliary heat exchanger 60 uses waste heat of the first radiator 48 (first heat transfer medium C1), which can reduce time required for the warm-up operation for the electrical components E.

### [Work vehicle 10 including another temperature control system TS]

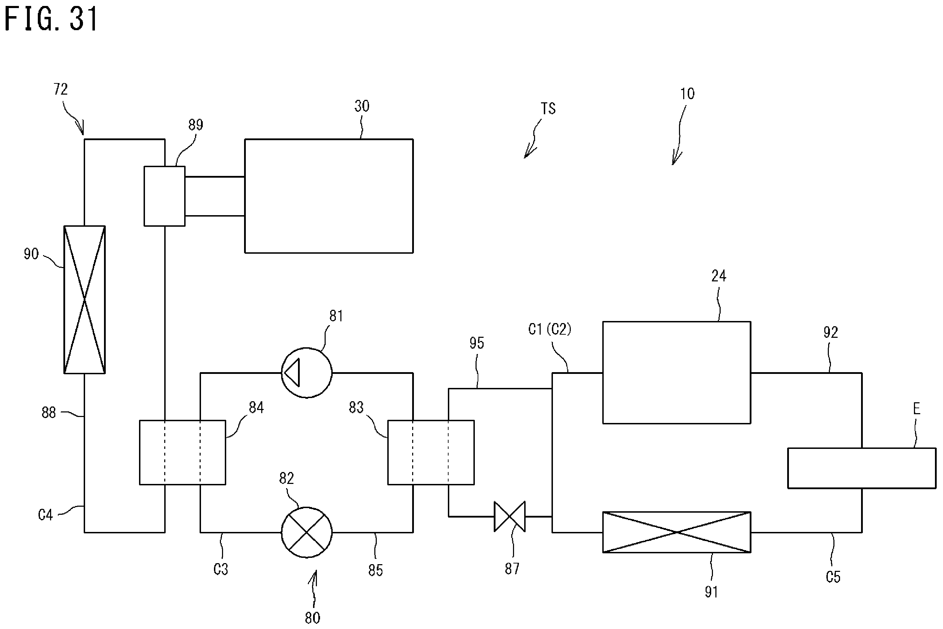

FIG. 31 is an explanatory diagram of a temperature control system TS of a work vehicle 10 different in form from the temperature control system TS illustrated in FIG. 29 and the temperature control system TS illustrated in FIG. 30. The work vehicle 10 having the configuration illustrated in FIG. 31 is the same as the work vehicle 10 illustrated in FIG. 25 except for the temperature control system TS. That is, the work vehicle 10 includes a chassis 41 corresponding to a machine frame, a fuel cell 24 installed on the chassis 41, and electrical components E installed on the chassis 41.

The temperature control system TS illustrated in FIG. 31 includes a radiator 91 as a heat exchanger. The radiator 91 adjusts a temperature of the fuel cell 24 and/or a temperature of each electrical component E, using a heat transfer medium C5. In the form illustrated in FIG. 31, the temperature control system TS includes a circulation flow path 92 passing through the radiator 91. The heat transfer medium C5 flows through the circulation flow path 92, and passes through both the fuel cell 24 and the electrical components E. The heat transfer medium C5 is used to adjust temperatures of the fuel cell 24 and electrical components E (e.g., cool the fuel cell 24 and the electrical components E).

The temperature control system TS illustrated in FIG. 31 includes an air conditioner 80 and a heating unit 72 configured to increase a temperature of the battery 30 using a fourth heat transfer medium C4.

The air conditioner 80 includes a compressor 81, an expansion valve 82, an evaporator 83, and a condenser 84, and has a cooling function using a third heat transfer medium C3. The heating unit 72 increases the temperature of the battery 30 using a fourth heat transfer medium C4. The air conditioner 80 and the heating unit 72 are the same as the air conditioner 80 and the heating unit 72 illustrated in FIG. 30.

The circulation flow path 92 includes a bypass flow path 95. The bypass flow path 95 is provided with a valve 87. The valve 87 has a valve element whose opening degree is arbitrarily changeable, and adjusts a flow rate of the heat transfer medium C5 passing through the evaporator 83. The valve 87 has the same function as the function of the valve 87 of the temperature control system TS illustrated in FIG. 30.

The heating unit 72 includes an electric heater 90 configured to heat the fourth heat transfer medium C4. The electric heater 90 is capable of increasing the temperature of the battery 30 quickly.

When a temperature of the heat transfer medium C5 is higher than a temperature of the third heat transfer medium C3 for the air conditioner 80, the evaporator 83 performs heat exchange between the heat transfer medium C5 flowing through the bypass flow path 95 and the third heat transfer medium C3. The temperature of the heat transfer medium C5 is reduced using the third heat transfer medium C3. The fuel cell 24 and the electrical components E are cooled using the heat transfer medium C5 whose temperature has been reduced with the third heat transfer medium C3. In other words, the fuel cell 24 and the electrical components E are cooled while being supplemented by the third heat transfer medium C3.

The condenser 84 performs heat exchange between the fourth heat transfer medium C4 and the third heat transfer medium C3. If the temperature of the battery 30 is low, the capability of the battery 30 decreases. When the condenser 84 performs the heat exchange between the fourth heat transfer medium C4 and the third heat transfer medium C3, the temperature of the fourth heat transfer medium C4 is increased using waste heat of the air conditioner 80 (third heat transfer medium C3). The fourth heat transfer medium C4 can be used to efficiently increase the temperature of the battery 30.

### [Others]

The foregoing embodiments are in all aspects illustrative and not restrictive. The scope of the present invention is defined by the claims rather than the foregoing embodiments, and includes all modifications within the scope of the configurations recited in the claims and their equivalences.

Reference signs used in Chapter 3 are used only in Chapter 3 and are not related to reference signs in other chapters.

The configurations disclosed in Chapter 3 are applicable to the invention disclosed in Chapter 1 or Chapter 2, and the configurations disclosed in Chapter 1 or Chapter 2 are applicable to the invention disclosed in Chapter 3.

### [Reference signs list]

- 10: work vehicle (work machine)
- 24: fuel cell
- 30: battery
- 31: motor
- 41: chassis (machine frame)
- 48: first radiator (first heat exchanger)
- 49: second radiator (first heat exchanger)
- 60: auxiliary heat exchanger
- 61: bypass flow path
- 62: flow path
- 63: bypass valve
- 72: heating unit
- 80: air conditioner
- 81: compressor
- 82: expansion valve
- 83: evaporator
- 84: condenser
- 87: valve (first valve)
- 89: valve (second valve)
- 90: electric heater
- 91: radiator (heat exchanger)
- C1: first heat transfer medium
- C2: second heat transfer medium
- C3: third heat transfer medium
- C4: fourth heat transfer medium
- C5: heat transfer medium
- E: electrical component
- H1: first flow path
- H2: second flow path

## Claims

1. A work machine comprising:
a vehicle main body;
a fuel cell installed on the vehicle main body;
a battery configured to store electric power generated by the fuel cell;
a motor configured to operate using electric power as energy;
a first power converter; and
a second power converter,
wherein
the vehicle main body includes:
a vehicle body frame; and
a support structure with which the first power converter and the second power converter are mounted to the vehicle body frame, and
the support structure includes:
a base portion mounted to the vehicle body frame;
a first support portion including a first upright portion extending upright from the base portion, and supporting the first power converter with the first power converter mounted to the first upright portion; and
a second support portion including a second upright portion extending upright from the base portion, and supporting the second power converter with the second power converter mounted to the second upright portion.

2. The work machine according to claim 1, wherein
the first power converter has a box shape, and
the first upright portion has a first mounting surface facing one surface of the first power converter having the box shape such that the one surface is mounted to the first mounting surface.

3. The work machine according to claim 2, wherein
the second power converter has a box shape, and
the second upright portion has a second mounting surface facing one surface of the second power converter having the box shape such that the one surface is mounted to the second mounting surface.

4. The work machine according to claim 3, wherein
the first mounting surface and the second mounting surface are spaced apart from each other in a width direction of the vehicle main body.

5. The work machine according to claim 4, wherein
the first power converter is disposed between the first mounting surface and the second mounting surface.

6. The work machine according to any one of claims 1 to 5, wherein
the first support portion and the second support portion are separate members and are individually mountable to the base portion.

7. The work machine according to any one of claims 1 to 5, wherein
the first support portion, the second support portion, and a part of the base portion are integrated as a single member.

8. The work machine according to any one of claims 1 to 7, wherein
the support structure includes a cover covering, from a vehicle lateral side, a support unit including the first support portion and the second support portion.

9. The work machine according to claim 8, wherein
the first support portion and the second support portion are arranged side-by-side in a vehicle-width direction, and
the cover covers the support unit from an outside in the vehicle-width direction.

10. The work machine according to claim 8 or 9, wherein
the first power converter and the second power converter are respectively connected to harnesses, and
the cover covers a connection portion between the first power converter and the harness and a connection portion between the second power converter and the harness.

11. The work machine according to any one of claims 1 to 10, wherein
the vehicle main body includes a cabin, and
the first support portion and the second support portion are located below the cabin.

12. The work machine according to claim 11, wherein
the vehicle main body includes rear wheels on both sides of the vehicle body frame in a vehicle-width direction, and
the first support portion and the second support portion are located between one of the rear wheels disposed in a pair and the vehicle body frame.

13. The work machine according to claim 6, wherein
the support structure includes:
a first bolt with which the first support portion is fixed to the base portion;
a second bolt with which the second support portion is fixed to the base portion; and
a third bolt with which the first support portion and the second support portion are coupled together.

14. The work machine according to any one of claims 1 to 13, wherein
the first power converter is located inward of the second power converter in a vehicle-width direction,
the second support portion includes, as the second upright portion, a second inner frame located inward of the second power converter in the vehicle-width direction, and an outside of the second support portion in the vehicle-width direction is open, and
the support structure includes a cover covering, from the outside of the second support portion in the vehicle-width direction, the second power converter supported by the second support portion.

15. The work machine according to claim 14, wherein
the first support portion includes, as the first upright portion, a first inner frame located inward of the first power converter in the vehicle-width direction, and an outside in the vehicle-width direction is open.
